(19) Europäisches Patentamt
European Patent Office
Office européen des brevets

(11) **EP 2 051 853 B1**

(12) **EUROPEAN PATENT SPECIFICATION**

(45) Date of publication and mention
of the grant of the patent:
**18.07.2018 Bulletin 2018/29**

(21) Application number: **07785733.2**

(22) Date of filing: **09.08.2007**

(51) Int Cl.:
***B32B 27/00*** *(2006.01)*

(86) International application number:
**PCT/DK2007/000369**

(87) International publication number:
**WO 2008/017307 (14.02.2008 Gazette 2008/07)**

(54) **A GAS PERMEABLE MEMBRANE**

GASDURCHLÄSSIGE MEMBRAN

MEMBRANE PERMÉABLE AUX GAZ

(84) Designated Contracting States:
**DE NL**

(30) Priority: **09.08.2006 US 501647**

(43) Date of publication of application:
**29.04.2009 Bulletin 2009/18**

(73) Proprietor: **Maersk Container Industry A/S
6360 Tinglev (DK)**

(72) Inventors:
• **SCHMIDT,Richard
DK-9300 Graasten (DK)**
• **JØRGENSEN, Gert
DK-6300 Graasten (DK)**
• **NYMEIJER, Dorothea, Catharina
NL-7577 SJ Oldenzaal (NL)**
• **ROLEVINK, Hendrikus, Henry, Maria
NL-7523 VV Enschede (NL)**

(74) Representative: **Zacco Denmark A/S
Arne Jacobsens Allé 15
2300 Copenhagen S (DK)**

(56) References cited:
**EP-A- 0 611 037          WO-A-99/12735
WO-A-2004/107868     US-B1- 6 410 465**

EP 2 051 853 B1

**Description**

**BACKGROUND OF THE INVENTION**

**1. Field of the Invention**

The present invention relates to an apparatus for controlling the composition of gases within a sealed container.

The invention further relates to a method for controlling the composition of gases in a sealed container, a sealable container comprising a gas permeable membrane for controlling the composition of gases within the container and the use of a membrane having a high $CO_2$ flux and a high $CO_2/O_2$ selectivity for controlling the composition of gases in a sealed container.

The use of shipping or transportation containers is well known for the transport of products and commodities over long distances. To extend or otherwise preserve the shelf life of such transportable products the shipping containers are normally equipped with some form of temperature regulation system, such as a refrigeration system.

The combined proportions of carbon dioxide and oxygen in ambient atmospheric air are about 21%. However, such a ratio or composition of carbon dioxide and oxygen often does not suit or provide an optimal environment for enhancing the shelf life of a lot of stored products.

Instances in which the products to be transported are perishable goods, such as fruit and/or vegetables, transport containers may also incorporate a system adapted to modify the composition of the refrigerated air surrounding the stored contents. As fresh fruit and vegetables represent active biological systems the atmosphere of a container will constantly change as gases and moisture are consumed or produced by the metabolic processes (such as respiration) occurring within the biological systems present. Furthermore, the shelf life of a lot of shipped produce is highly dependent on the composition of gases within a container where the optimal gaseous composition of a storage container is highly dependent on the specific produce being stored.

When packed, fruits produce $CO_2$ by using $O_2$ that is present in the package due to respiration. To prevent decay of the fruits, it is required to control the $CO_2$ level, e.g. by controlling the exposure of a permeable package wall (= membrane) towards the atmosphere, which contains hardly any $CO_2$.

The basic idea behind this is that, due to the concentration gradient, $CO_2$ will permeate through a permeable wall towards the air-side, thus lowering the $CO_2$ level. Thus, membranes having a high $CO_2$ flux are desired.

By incorporating an atmospheric modification or control system into a transport container the respiration rates of the stored produce and the composition of gases present within a container may be regulated, thereby providing an effective means for prolonging the shelf life of the container contents in addition to the refrigeration of the air. In particular, the respiration rates of stored produce may be retarded by controlling the mix and/or partial volumes of oxygen, carbon dioxide and nitrogen within the container.

Because an opposite concentration gradient for $O_2$ exists, $O_2$ will permeate from the air side to the fruit side. To minimise this and thus prevent further production of $CO_2$, membranes having a high $CO_2$ flux and a high $CO_2/O_2$ selectivity are desired.

The aim of the invention is to provide $CO_2/O_2$ selective membranes with a high $CO_2$ flux and a high $CO_2/O_2$.

Furthermore, a container may provide an environment suitable for the growth of spoilage microorganisms and the proliferation of insects and other pests. To counter such activity systems normally rely on the use of chemicals to eliminate pathogen and insect damage to stored produce. The use of atmosphere control systems adapted to control respiration may also inhibit pathogen production and kill insects, and therefore contribute to a reduction in the number and quantity of chemicals, being applied to reduce or eliminate such damage to stored produce. For example, trials have demonstrated that the greatest impact on insect proliferation within a container may be achieved by maintaining reduced levels of oxygen for extended periods of time, which leads to oxygen deprivation in insect body tissue.

**2. Description of the Related Art**

A common approach used in shipping containers to increase the shelf life of produce stored is to create an "ideal" or optimum storage atmosphere (that is different from that of ambient air) at the beginning of the storage period and to maintain that atmosphere. In some cases containers are initially flushed to remove or add gases resulting in an internal gas composition around the stored produce that is different from that of ambient air.

Once the oxygen content of the gases within a container drops further as a result of respiration, inlets may be opened to allow fresh air into the container, thereby delivering oxygen into the container. Such systems often rely on the use of membranes or films which are adapted to prevent the movement of gases into or out of the container, and such systems are commonly referred to as Modified Atmosphere (MA) systems.

However, by ventilating the container with fresh air and letting out the container air, the composition of the gas in the container will over time eventually result in a gas composition in which the carbon dioxide and oxygen content (as a sum proportion of container gases) approaches approximately 21%. Such a proportion of carbon dioxide and oxygen is not necessarily an optimal environment for the storage of certain products. If the container is not initially flushed, the sum of oxygen and carbon dioxide will always remain approximately 21%.

Although such systems may be relatively inexpensive to integrate into a container they are not well suited to adequately control and maintain optimum levels of carbon dioxide within a container, where such optimum levels often differ from those levels of carbon dioxide present in ambient air.

Moreover, the sum proportion of carbon dioxide and oxygen in a container will always remain approximately 21% unless the composition of either the outgoing and/or ingoing air is actively and effectively manipulated to thereby change this sum proportion (of 21 %) as necessary. Other methods, for example the use of carbon dioxide absorbent lime, can be used to actively and selectively remove gases from the cargo space of a container. However, such methods have disadvantages including the disposal of used lime and ineffective control.

An alternative approach is to provide a container having concentrations of oxygen and/or carbon dioxide that are different from that of ambient air and regularly measuring and actively maintaining those concentrations during a storage period. In particular, such systems will typically maintain low levels of oxygen and higher levels of carbon dioxide (compared to ambient air) so that the levels of respiration occurring within stored produce may be controlled. To effectively gauge the concentrations and/or volumes of oxygen and other gases within a container such a system may often utilize sensor technology which is located within a container and is adapted to actively assess the gaseous composition inside the container. These systems are commonly referred to as Controlled Atmosphere (CA) systems.

Such Controlled Atmosphere (CA) systems are adapted to ensure that the appropriate remedial action is taken to ensure that the gaseous composition of a container is maintained, or returned to an optimal level when deviation occurs. To ensure optimal levels of gases are maintained (usually this involves reduced oxygen levels and increased carbon dioxide levels) many Controlled Atmosphere (CA) systems are provided with a filter adapted to compress and separate the components of incoming air. In this way, as air is directed into a container, excess oxygen may be prevented from entering the container, which is desirable as it will ensure the retardation of respiratory activity within the container.

Use of Controlled Atmosphere (CA) systems will enable a container to maintain the optimal gas composition specifically suited to the produce and/or goods contained within where such a gas composition may be actively controlled throughout the period of storage.

Whilst such a system may effectively control and maintain optimal conditions that will contribute to longevity of stored produce such systems are extremely expensive to manufacture and maintain. Moreover, these systems tend to be very complicated and typically demand the services of a skilled and specialized work force to ensure they are adequately maintained.

The provision of an improved control system which can actively monitor the composition of gases in a container and provide an optimal environment for the storage of container contents would be of advantage.

The provision of a system able to effectively control the flow of gases into and/or out of a container to thereby promote a gaseous atmosphere in a container which will prolong the shelf life of stored produce would be of advantage. The provision of such a system which is both relatively inexpensive to produce and maintain would be advantageous.

An apparatus for controlling the atmosphere in a container is disclosed in International Patent Application No. WO 2004/107868 disclosing a container including a plurality of walls and at least one inlet and/or outlet. Within the container is an apparatus including a sensor, a controller and a gas permeable membrane being adapted to facilitate the passage there through of different gasses at different rates. The membrane is separating the container into a first region and a second region, the first region being for holding cargo, and the second region defining a gas buffer region, where at least one inlet and/or outlet communicate(s) with the buffer region.

A problem to be solved is to achieve a controlled atmosphere in the cargo region of a container, wherein a membrane is able to obtain and hold low concentrations of carbon dioxide and of oxygen in the atmosphere in the cargo region.

It is an object of the present invention to address at least some of the foregoing problems or at least to provide the public with a useful choice.

It is an object of the invention is to control the atmosphere within a container in a sufficient and stable way.

It is not appropriate if it is necessary to design a specific membrane to use with each kind of perishable goods, such as fruit and/or vegetables. It is therefore preferable to design a single membrane, which membrane is capable of handling gas concentrations in the cargo region from as close to 0% carbon dioxide as possible to approximately 21% carbon dioxide and from of approximately 21% oxygen to as close to 0% oxygen as possible.

Further aspects and advantages of the present invention will become apparent from the ensuing description which is given by way of example only.

US Patent No. 6,376,032 discloses gas-permeable membranes which are particularly useful in the packaging of fresh cut fruit and vegetables, and other respiring biological materials. The membranes have an $O_2$ permeability of at least 775,000 ml/m$^2$.atm.24 hrs, a P10 ratio of at least 1.3, and a ratio of $CO_2$ permeability to $O_2$ permeability (R) of at least 1.5, and are made by forming thin polymeric coatings on microporous polymeric films. Preferred coating polymers are side chain crystalline polymers. Preferred microporous films contain inorganic fillers, particularly such films based on ultrahigh molecular weight polyethylene or polypropylene.

## SUMMARY OF THE INVENTION

The present invention relates to an apparatus for controlling the composition of gases within a sealable container, said container including a plurality of walls, said apparatus having at least one inlet and/or outlet, the apparatus including at least one sensor, at least one controller and at least one gas permeable membrane through which membrane different gasses can pass at different rates, said container comprising a first region for holding cargo and apparatus and membrane defining a second gas buffer region, said at least one inlet and/or outlet being in communication with said buffer region and said membrane being permeable permitting for oxygen and carbon dioxide at different flow rates, where permeability is measured in accordance with the experimental section in the description, said membrane comprising a layer determining the selectivity of the membrane, wherein said layer of the membrane is made from a copolymer of a polyether and a polyamide.

In a further aspect the invention relates to a method for controlling the composition of gases within a sealable container, said method comprising providing the container with an apparatus including at least one inlet and/or outlet, at least one sensor, at least one controller and at least one gas permeable membrane through which membrane different gasses can pass at different rates, said container comprising a first region for holding cargo, and said apparatus and membrane defining a second buffer region, said at least one inlet and/or outlet being in communication with said buffer region and said membrane being permeable permitting for oxygen and carbon dioxide at different flow rates, said membrane comprising a layer determining the selectivity of the membrane, wherein the membrane is made from a copolymer of a polyether and a polyamide, said method comprising a continuous or intermittent replacement of a part of or all the gas of the buffer region with gas from the ambient air, where permeability is measured in accordance with the experimental section in the description.

In a third aspect the invention relates to a sealable container having a plurality of walls, and at least one inlet and/or outlet, said container including an apparatus for controlling the composition of gases within the container, the apparatus including at least one sensor, at least one controller and at least one gas permeable membrane comprising a primary layer determining the selectivity of the membrane and a secondary backing layer of a microporous material with a very high permeability, through which membrane different gasses can pass at different rates, said membrane dividing the container into a first region being for holding cargo and a second region defining a gas buffer region, and said membrane being permeable permitting for oxygen and carbon dioxide at different flow rates, wherein the membrane is made from a copolymer of a polyether and a polyamide and has a permeability for carbon dioxide, which is at least eight times higher than the permeability for oxygen, where permeability is measured in accordance with the experimental section in the description, and wherein said at least one inlet and/or outlet is in communication with said buffer region.

## Brief Description of the Drawings

The invention is disclosed more in detail with reference to the drawings in which

figure 1 shows a side view of an embodiment of a container according to the invention,
figure 2 shows another embodiment of a container with a buffer region/zone located outside a container, and
figure 3 shows a further embodiment of a container with a buffer region/zone located inside a container,
figure 4 shows a schematic cross-sectional view of an embodiment of a membrane according to the invention,
figure 5 shows a graphic representation of the permeability of a membrane of the invention,
figure 6 shows a SEM picture of an embodiment of a membrane according to the invention,
figure 7 schematically shows an embodiment of a container according to the invention equipped with a vacuum pump,
figure 8 shows an embodiment of a container with a buffer region/zone located inside the container and equipped with a vacuum pump,
figure 9 shows a graphical representation of the change of concentrations of oxygen and carbon dioxide as a function of time in one experimental setup
figure 10 shows a graphical representation of the change of concentrations of oxygen and carbon dioxide as a function of time in another experimental setup, and
figure 11 shows a graphical representation of the change of concentrations of oxygen and carbon dioxide as a function of time in a third experimental setup.

## Detailed Description of the Present Invention

The present invention relates to an apparatus for controlling the composition of gases within a sealed container, said container including a plurality of walls, said apparatus having at least one inlet and/or outlet, the apparatus including at least one sensor, at least one controller and at least one gas permeable membrane comprising a primary layer determining the selectivity of the membrane and a secondary backing layer of a porous material with a very high permeability, said gas permeable membrane being permeable for oxygen and carbon dioxide at different flow rates, wherein the primary layer is made from a copolymer of a polyether and a polyamide.

It has surprisingly been found that copolymers of a polyether and a polyamide may be made into very thin membranes showing both a high permeability for $CO_2$ for and a high $CO_2/O_2$ selectivity. This is believed to be a result of high solubility of $CO_2$ in the block copolymers, depending on the block copolymer composition. Thus, such membranes render it is possible to provide a controlled atmosphere in the cargo region of a container, wherein the membrane is able to obtain and hold low concentrations of carbon dioxide and of oxygen in the atmosphere in the cargo region. Furthermore, it has been found that such membranes may be produced in a simple manner.

For the purpose of the present invention, a "membrane" may be defined as a thin barrier and such a permeable membrane is adapted to facilitate the transportation of different molecular species or parts of gases through the barrier (membrane) at different rates. Furthermore, the permeation of materials through the membrane may be driven by the relative material concentrations, partial pressure and/or polarity differentials of the parts of gasses which are applied to sides of the membrane, parts of gasses being molecules, atoms or the like.

During normal aerobic respiration quantities of oxygen will be consumed and replaced by carbon dioxide (and increased levels of water vapour). In a closed environment, such as a sealed container, the shelf life of perishable goods have been shown to be negatively affected, that is fruit and vegetables stored in oxygen deficient environments for prolonged periods of time will deteriorate and/or rot. Such a phenomenon is considered to be the result of the onset of anaerobic respiration, the by-products of which are more carbon dioxide and also alcohols and acetaldehydes. These by-products may quickly accumulate to toxic levels causing browning and death of fruit and vegetable tissue. Accordingly, to prolong the shelf life of stored goods it is considered necessary to ensure the availability of optimal concentrations and/or volumes of oxygen within the container.

As the levels of oxygen fall within the container the controller may be adapted to send an instruction to activate a valve (associated with bi-directional flow means, and inlet, or an outlet) to enable fresh air to flow into the container via an inlet. Conversely, as the fresh air is flowing into the container volumes of carbon dioxide may be evacuated from the container via an outlet located within same.

In a preferred embodiment the membrane consists fully or partly of polymeric material. Such a membrane is suitable in an embodiment, where the buffer region is formed as a kind of cartridge. The cartridge eventually being changeable and can be placed inside the container or outside the container with the membrane exposed to either the ambient atmosphere or to the atmosphere in the cargo region.

Further the membrane can consist fully or partly of ceramic material or of a combination of ceramic and polymeric material.

However, at optimal levels the concentration carbon dioxide may serve as an inhibitor to respiratory activity of perishables. Furthermore, an optimal composition of carbon dioxide within a container, in combination with an optimal oxygen composition, may cause the perishables stored to exist in a near dormant state the consequence of which is natural ripening and allows crops to be harvested closer to ripeness or to be exposed to extended transportation periods.

The content of carbon dioxide typically increases within the cargo region of the container (due to normal respiration of produce stored). Such carbon dioxide may therefore be adapted to flow through the permeable membrane from the cargo storage compartment into the gas buffer region, thereby reducing the volume of carbon dioxide within the cargo region. In one embodiment of a membrane the membrane comprises an intermediate layer, wherein the primary layer is attached to the intermediate layer which again is attached to the secondary layer.

It is preferred that the primary layer is in the form of a thin polymeric coating on a microporous backing layer.

Utilizing the membrane it is contemplated to utilize primary layers of a thickness as thin as 0,001 $\mu$m which should be sufficient to fulfil the purpose.

It has been found suitable that the effective thickness of a gas permeable membrane is in the range from 0.01 to 50 $\mu$m, more preferred from 0.4 to 30 $\mu$m, and preferably from 0.5 to 2.5 $\mu$m.

Suitable copolymers of a polyether and a polyamide for use for a gas permeable membrane are for example plasticizer free polyamide-12 based thermoplastic block copolymer as with a PEG ether segment having a melt flow of 10-20g/10 min, preferably 14g/10 min at 235 °C/1 kg load and a melting point of between 120-175 °C, suitably between 130 and 160 °C, and hardness of 15- 50, preferably about 40 shore D. Such polymers are available from ARKEMA BV, Ottho Heldringstraat 41, NL-1066 XT Amsterdam, The Netherlands.

Suitable materials for use as microporous (secondary) backing layer are e.g. highly filled microporous polyolefin-based materials, primarily with inert materials such as silica, such as Teslin® materials available from PPG, Pittsburgh, USA, or hydrophobic PVDF backing materials available from Millipore.

Further suitable materials for use as microporous backing materials are polyester of polypropylene non woven materials such as Ultraflo® polypropylene materials from BBA Fiberweb, 1 Victoria Villas, Richmond-on Thames, London TW8 2GW, UK having a basis weight from 15 to 88 grams per square meter, suitably from 60 to 80 grams per square meter.

Still further non-woven materials such as polypropylene/polyethylene Vliesstoff products such as RO2480, FO2465, FO2432D, FO 2463 or FO2470 Viledon® products available from Freudenberg Vliesstoffe KG, D-69465 Weinheim, Germany are suitable for the purpose.

Yet further nano-porous materials such as self-organizing polymers of the types disclosed in the article "Selvorganiserende polymerer - skabeloner til nanoporøse materialer" in Dansk Kemi, 85, No. 11, 2004, pages 32-34.

Furthermore, it has been found suitable that the secondary layer has a pore size of about 6.7 nm.

It has been found suitable for the purpose that the thickness of a secondary backing material is in the range 0.05 $\mu$m to 500 $\mu$m, depending on the porosity and the pore size of the material.

Preferred membranes are such which have a permeability value for $CO_2$ of 50-600 barrer and $CO_2/O_2$ selectivity above 8. The permeability value for $CO_2$ is preferably $_{100}$-500 barrer, e.g. 100-150 barrer.

In a membrane the primary layer is the selective layer controlling the diffusion of gasses through the membrane. The secondary backing functions as support or carrier for the selective layer and is preferably made from a porous material with a very high permeability not being limiting for the permeability of the relevant gasses. An intermediate layer preferably has a permeability which is higher than the permeability for the primary layer and most preferable with the same permeability as for the secondary layer.

An intermediate layer is typically applied in a thin layer (preferably thinner compared to the primary layer) to the secondary layer and is supposed to form a good adherence to the primary layer and also to reduce the penetration of a solution of material for forming a primary layer into the backing layer.

A suitable material for use as an intermediate layer in a membrane is e.g. a polyacrylonitrile (PAN) material such as GKSS HV materials available from GMT Membrantechnik GmbH, Am Rhein 5, D-79618 Rheinfelden, Germany. Such a membrane has a high permeability and a suitable porosity and surface evenness with very few fibres projecting from the surface enabling application of very thin coatings

A PAN layer may be applied to a backing from a solution in a suitable solvent using phase inversion technique.

Another suitable material for use as an intermediate layer in a membrane is e.g. a polyether imide (PEI) material such as PEI materials available from Jurima GmbH, Am Mittleren Moos 19, D-86167 Augsburg, Germany. Such a membrane is very flexible and hydrophobic and shows a low absorption of water reducing the risk of blocking of the porosity of the membrane by absorbed humidity, is thermoplastic and easily weldable and shows good adherence to a selective membrane and a secondary backing material facilitating a safe attachment thereof to a substrate and a selective membrane and may be processed into sheet having a suitable porosity for the purpose and may be processed using high speed equipment without increased risk of mechanical damage.

It is an object of the invention to provide a membrane capable of ensuring a sufficiently high flux of carbon dioxide to match the "production" of carbon dioxide from the high respiration rate of a commodity when the process is started. As the concentration of oxygen decreases in the cargo region and the respiration rate decreases as well as a consequence hereof, it is the aim to provide a membrane which has a selectivity high enough to ensure a carbon dioxide/oxygen-flux ratio greater than 1 through the membrane at any time during the decrease of oxygen and the increase of carbon dioxide in the cargo zone at any final set point for example 2 % oxygen and 2 % carbon dioxide, 2% oxygen and 1 % carbon dioxide, 1% oxygen and 1% carbon dioxide, 1% oxygen and approximately 0% carbon dioxide or approximately 0% oxygen and carbon dioxide.

When the process has started and the apparatus has obtained a kind of equilibrium, the content of carbon dioxide and oxygen should preferably be in the ranges from greater than 0 and up to 12-13% of the atmosphere. A membrane adapted to facilitate the transportation of different molecular species as parts of gasses contained in the atmosphere through the membrane at different rates. In a preferred embodiment a membrane is used, where a permeability of carbon dioxide is at least eight times higher than the permeability of oxygen.

In a preferred embodiment a membrane where the permeability of carbon dioxide is at least 9.5 times higher than the permeability of oxygen is used.

In a further preferred embodiment a membrane where the permeability of carbon dioxide is at least 19 times higher than the permeability of oxygen is used.

In a still further preferred embodiment a membrane where the permeability of carbon dioxide is at least 30 times higher than the permeability of oxygen is used.

The flow of carbon dioxide from the cargo region to the gas buffer region of a container will continue as long as the concentration of carbon dioxide within the cargo region remains higher than that of the gas buffer region. Once the concentration of carbon dioxide within the cargo region equals that within the gas buffer region equilibrium will be reached - that is, the flow of carbon dioxide through the permeable membrane will cease.

In a further preferred embodiment the gas permeable film may be adapted to facilitate the flow of oxygen from the gas buffer region of the container to the storage compartment of the container. In particular, the selectively permeable polymeric membrane may allow oxygen to flow through it, provided that the direction of such flow is opposite that of the carbon dioxide. To achieve a membrane with sufficient surface area and with suitable physical dimensions, a preferred embodiment of the membrane is folded or pleated to achieve a surface area greater than the actual physical extension.

Hereby it is possible to maintain a great flow of volume (or flux) through the membrane at a relative small physical extension.

The flow of volume through the membrane is directly proportional with the area of the membrane.

A further aspect relates to a method for the manufacture of a gas permeable membrane comprising a primary layer determining the selectivity of the membrane and a secondary backing layer of a porous material with a very high permeability, said gas permeable membrane being permeable for oxygen and carbon dioxide at different flow rates, wherein the primary layer is made from a copolymer of a polyether and a polyamide, which method comprises dissolving the polymer in a suitable solvent providing a coating solution, coating the backing layer with an ultra thin layer of the polymer at an elevated temperature by submersing the backing layer vertically into the coating solution during for a short period, optionally applying a further coating, if desired, and drying the membranes horizontally in a box under nitrogen atmosphere for a suitable period of time.

Suitable solvents are e.g. lower alkanols such as methanol, ethanol, n- or isopropanol, n-, iso- or tert.butanol or even higher alkanols. Ethanol, n-propanol, n-butanol or mixtures thereof are preferred, especially ethanol. Such alkanols are preferably anhydrous. The alcohols may be denatured but preferably have a purity of 99.99% or more.

The coating preferably takes place at elevated temperatures for the reasons of stability of the solutions, suitably at a temperature from about 60 °C to about 100 °C, considering the heat stability of the backing material, e.g. at 75 °C.

A typical dipping time may be from 1 to 5 seconds, suitable about 2 seconds.

In case a second or further dipping is desired, the membrane is suitably dried for about one hour in an inert atmosphere such as a nitrogen atmosphere between dipping.

It has been found that when producing a membrane using a solution of a copolymer of a polyether and a polyamide it is advantageous to add an alkali metal halide such as lithium chloride in an amount of 0.01 to 0.6% increasing the solubility in ethanol and improving the coating properties of the solution.

Finally, the membranes are dried horizontally in a box under nitrogen atmosphere for a period of time from 8 to 40 hours, suitably for about 24 hours.

Alternatively, the coating of a backing with a solution of a polymer for forming a membrane may carried our using a so-called "kiss coater" working continuously and having two rollers one on top of the other wherein the bottom roller picks up the solution and transfers it to the top roller that in turn transfers it to the backing. The application rate is adjusted by metering the distance between the two rollers. Suitable kiss coaters for the purpose of the present invention is/are a NCR-300 or SG-700 coater from Mirwec Film, Inc., P.O. Box 2263, 601 S. Liberty Dr, Bloomington, IN 47402, USA.

The present invention relates to an apparatus for controlling the composition of gases within a sealable container, said container including a plurality of walls, said apparatus having at least one inlet and/or outlet, the apparatus including at least one sensor, at least one controller and at least one gas permeable membrane through which membrane different gasses can pass at different rates, said container comprising a first region for holding cargo and apparatus and membrane defining a second gas buffer region, said at least one inlet and/or outlet being in communication with said buffer region and said membrane being permeable permitting for oxygen and carbon dioxide at different flow rates, where permeability is measured in accordance with the experimental section in the description, said membrane comprising a layer determining the selectivity of the membrane, wherein said layer of the membrane is made from a copolymer of a polyether and a polyamide.

In one embodiment of an apparatus capable of solving this problem is used a membrane having a high selectivity, said membrane having a selectivity and permeability that can handle a gradient in the composition of atmosphere going from approximately 21% oxygen at a first side to approximately 0% oxygen at a second side of the membrane and from approximately 0% carbon dioxide at the first side to 21% carbon dioxide at the second side of the membrane.

In one embodiment the at least one inlet and/or outlet is adapted to be able to bring the cargo region of the container and the buffer region in mutual communication.

Preferably the gas permeable membrane may be adapted to facilitate the flow of carbon dioxide from the cargo compartment of the container to the gas buffer region of the container. As discussed above, normal aerobic respiration requires the availability of oxygen and produces carbon dioxide as a waste product. The effective disposal of this waste product is essential as above specific threshold levels, high carbon dioxide concentrations in a container combined with low levels of oxygen may result metabolic imbalances in perishables that result in internal damage of the goods. It is also foreseen to use of several membranes with varying selectivity, each membrane having a specific selectivity to the different stages of concentration and composition of gases during the storing period is a solution to obtain the above atmosphere, albeit not the most adequate solution.

In a preferred embodiment of an apparatus according to the invention the membrane comprises a primary layer determining the selectivity of the membrane and a secondary backing layer of a microporous material with a very high permeability, not being limiting for the permeability of the relevant gasses.

In another preferred embodiment of an apparatus according to the invention the membrane comprises an intermediate layer, wherein the primary layer is attached to the intermediate layer which again is attached to the secondary layer.

The membrane preferably has a permeability value for $CO_2$ of 50-600 barrer ($1 \cdot 10^{-10}$ $cm^3 \cdot cm/cm^2 \cdot s \cdot cmHg$) and a permeability for carbon dioxide, which is at least eight times higher than the permeability for oxygen, not being limiting for the permeability of the relevant gasses.

Preferred membranes of an apparatus according to the invention are such which have a permeability value for $CO_2$ of 50-600 barrer and $CO_2/O_2$ selectivity above 8. The permeability value for $CO_2$ is more preferably 100-500 barrer, e.g. 100-150 barrer.

It is preferred that the membrane of an apparatus of the invention has a permeability for carbon dioxide, which is at least 9,5 times higher than the permeability for oxygen, more preferred least 19 times higher than the permeability for oxygen and most at least 30 times higher than the permeability for oxygen, not being limiting for the permeability of the relevant gasses.

In accordance with a preferred embodiment of an apparatus of the invention such apparatus is adapted to be used in a container where such an apparatus preferably is adapted to control the composition of gases within a container. Reference throughout this specification will be made to the present invention being used to control the composition of gases within containers, but those skilled in the art should appreciate that other applications are also envisioned for the present invention.

In a further aspect the invention relates to a method for controlling the composition of gases within a sealable container, said method comprising providing the container with an apparatus including at least one inlet and/or outlet, at least one sensor, at least one controller and at least one gas permeable membrane through which membrane different gasses can pass at different rates, said container comprising a first region for holding cargo, and said apparatus and membrane defining a second buffer region, said at least one inlet and/or outlet being in communication with said buffer region and said membrane being permeable permitting for oxygen and carbon dioxide at different flow rates, said membrane comprising a layer determining the selectivity of the membrane, wherein the membrane is made from a copolymer of a polyether and a polyamide, said method comprising a continuous or intermittent replacement of a part of or all the gas of the buffer region with gas from the ambient air, where permeability is measured in accordance with the experimental section in the description.

In accordance with an alternative embodiment of the invention a continuous or intermittent replacement of a part of or all the gas of the buffer region with gas from the first region is carried out.

In a further embodiment of the method the cargo region and the buffer region are divided or separated by the membrane.

The method further makes it possible to regulate and/or control the composition of gases in the enclosure by mixing the gas composition in the gas buffer region and/or the cargo region with air from the atmosphere is done by opening one or more valves to the ambient atmosphere.

Further it is possible to regulate and/or control the composition of gases in the enclosure by mixing the gas composition in the gas buffer region and/or the cargo region with a gas or a mixture of gasses from a supply source.

The gas or mixture of gasses can be used to flush the cargo region, the buffer region or both, after the perishables are positioned in the cargo region or a gas or a mixture of gases can be used to adjust the momentary gas composition within the cargo region, the buffer region or both.

It is preferred that the primary layer is in the form of a thin polymeric coating on a microporous backing layer with a very high permeability, not being limiting for the permeability of the relevant gasses.

It is preferred that the membranes are such which have a permeability value for $CO_2$ of 50-600 barrer ($1 \cdot 10^{-10}$ $cm^3 \cdot cm/cm^2 \cdot s \cdot cmHg$) and a permeability for carbon dioxide, which is at least eight times higher than the permeability for oxygen, where permeability is measured in accordance with the experimental section in the description.

Preferred membranes according to the method of the invention are such which have a permeability value for $CO_2$ of 50-600 barrer and $CO_2/O_2$ selectivity above 8. The permeability value for $CO_2$ is more preferably 100-500 barrer, e.g. 100-150 barrer.

In one embodiment of the method according to the invention the regulation of the composition of gases in the first region is effected by mixing the gas in the gas buffer region and/or the cargo region with air from the atmosphere by opening one or more valves to the ambient atmosphere.

In one embodiment of the method according to the invention the regulation of the composition of gases in the first region is effected by mixing the gas composition in the gas buffer region and/or the cargo region with a gas or a mixture of gasses from a source having a different composition of gases.

Such a source may e.g. be in the form of a pressurized cylinder comprising gas of the desired composition.

The method according to the invention preferably has at least one of the following characteristics

(i) measuring the content of carbon dioxide in the buffer region and if necessary mixing, diluting or replacing the gas in the buffer region and/or the cargo region with air from the outside atmosphere;

(ii) measuring the content of carbon dioxide in the cargo region and if necessary mixing, diluting or replacing the gas in the buffer region and/or the cargo region with air from the outside atmosphere;

(iii) measuring the content of oxygen in the buffer region and if necessary mixing, diluting or replacing the gas in the buffer region and/or the cargo region with air from the outside atmosphere;

(iv) measuring the content of oxygen in the cargo region and if necessary mixing, diluting or replacing the gas in the buffer region and/or the cargo region with air from the outside atmosphere.

A further embodiment of the invention relates to a method for controlling the composition of gases within a sealed container, said method comprising providing the container with an apparatus including at least one inlet and/or outlet, at least one sensor, at least one controller and at least one gas permeable membrane through which membrane different gasses can pass at different rates, said container comprising a first region for holding cargo, and said apparatus and membrane defining a second buffer region, said at least one inlet and/or outlet being in communication with said buffer region and said membrane being permeable permitting for oxygen and carbon dioxide at different flow rates, said membrane comprising a layer determining the selectivity of the membrane, said method comprising establishing a sub-atmospheric pressure in the buffer region sucking off gas from the first region of the container through the membrane.

The membrane is suitably made from a copolymer of a polyether and a polyamide.

In one embodiment of the invention the membrane comprises a primary layer determining the selectivity of the membrane and a secondary backing layer of a microporous material with a very high permeability, not being limiting for the permeability of the relevant gasses.

It is preferred that the membrane has a permeability value for $CO_2$ of 50-600 barrer ($1 \cdot 10^{-10}$ $cm^3 \cdot cm/cm^2 \cdot s \cdot cm$-Hg) and a permeability for carbon dioxide, which is at least eight times higher than the permeability for oxygen, where permeability is measured in accordance with the experimental section in the description.

Preferred membranes are as stated above.

This embodiment of a method according to the invention preferably has at least one of the following characteristics

(i) measuring the content of carbon dioxide in the buffer region and if necessary sucking off gas in the buffer region and the cargo region through the membrane;

(ii) measuring the content of carbon dioxide in the cargo region and if necessary sucking off gas in the buffer region and the cargo region through the membrane;

(iii) measuring the content of oxygen in the buffer region and if necessary sucking off gas in the buffer region and the cargo region through the membrane;

(iv) measuring the content of oxygen in the cargo region and if necessary sucking off gas in the buffer region and the cargo region through the membrane.

In a third aspect the invention relates to a sealable container having a plurality of walls, and at least one inlet and/or outlet, said container including an apparatus for controlling the composition of gases within the container, the apparatus including at least one sensor, at least one controller and at least one gas permeable membrane comprising a primary layer determining the selectivity of the membrane and a secondary backing layer of a microporous material with a very high permeability, through which membrane different gasses can pass at different rates, said membrane dividing the container into a first region being for holding cargo and a second region defining a gas buffer region, and said membrane being permeable permitting for oxygen and carbon dioxide at different flow rates, wherein the membrane is made from a copolymer of a polyether and a polyamide and has a permeability for carbon dioxide, which is at least eight times higher than the permeability for oxygen, where permeability is measured in accordance with the experimental section in the description, and wherein said at least one inlet and/or outlet is in communication with said buffer region.

In a preferred embodiment the membrane comprises a primary layer determining the selectivity of the membrane and a secondary backing layer of a microporous material with a very high permeability, not being limiting for the permeability of the relevant gasses.

In a more preferred embodiment the membrane has a permeability value for $CO_2$ of 50-600 barrer ($1 \cdot 10^{-10}$ $cm^3 \cdot cm/cm^2 \cdot s \cdot cmHg$) and a permeability for carbon dioxide, which is at least eight times higher than the permeability for oxygen, where permeability is measured in accordance with the experimental section in the description.

Preferred membranes according to the invention are such which have a permeability value for $CO_2$ of 50-600 barrer and $CO_2/O_2$ selectivity above 8. The permeability value for $CO_2$ is more preferably $_{100}$-500 barrer, e.g. 100-150 barrer.

In a further embodiment the first region and the second region are divided or separated by the membrane.

Preferable at least one container wall is adapted to locate said membrane.

The flow means are represented by means provided to lead or transport a gas or a mixture of gasses, such as pipes, tubes, ducts, hoses, canals, leading or transporting gas or mixture of gasses (or ambient air) from one enclosure to another and/or from/to an enclosure to/from the ambient atmosphere.

In a preferred embodiment of the invention only one membrane is included, but more than one membrane of the substantially same type can be used to increase the total membrane area. A membrane may be preferably located by at least one wall of a container and may be adapted to affix to the interior of a container so as to divide said container into at least two sections. For example, a membrane affixed to the side walls, the roof and the floor of a container may effectively divide the container into two compartments, a first compartment being located substantially near the front of the container, and a second compartment being located substantially near the rear or door end of the container.

In a further preferred embodiment the membrane may be located substantially near the rear of the container. In such an embodiment the gas buffer region may therefore be located near the rear of the container. Furthermore, such a membrane may be located to provide a void or buffering region around at least one bi-directional flow means which is adapted to control the flow of air into the buffer region (from outside the container) and the flow of gases out of the buffer region both into the storage compartment and completely out of the container.

However, in alternative embodiments the gas permeable membrane may be located or positioned in any number of orientations with respect to the container and need not be located substantially near the rear of the container so as to divide the container into two compartments. For example, the gas permeable membrane may be shaped as a bag or box. By shaping the gas permeable membrane as a bag or box, the buffer region can be made as an independent or replaceable unit, which can be located on either the exterior or the interior of a container it can even be located on the exterior side as well as the interior side of a container. In alternative embodiments a container may include two, three or more membranes which may be positioned to divide the container into three, four or more regions. In addition, a membrane adapted for use with the present invention may be formed from any number or varieties of materials which exhibit gas or fluid permeable and/or selectively permeable characteristics. Those skilled in the art should appreciate that other locations for a permeable membrane and quantities and characteristics of a membrane are also envisioned and reference to the above only throughout this specification should in no way be seen as limiting.

In a further preferred embodiment a sensor located within the container may be adapted to sense the concentrations and/or volumes of carbon dioxide within the cargo storage compartment of a container.

A sensor may be appropriately positioned to illicit the concentrations of carbon dioxide within the various regions of a container. In particular, a sensor may be able to detect or sense when carbon dioxide levels within the cargo region are at a level indicative of respiratory activity has taken place within the container. In such instances the sensor may send a signal (such as a digital or analogue signal, or a voltage or amplitude value) to the controller which is adapted to activate or deactivate a valve controlling a bi-directional flow means such that an outlet located in the gas buffer region may open, thereby evacuating the carbon dioxide from that region and allowing carbon dioxide to continue to flow through the membrane.

Preferably a bi-directional flow means known per se located near the rear of the container may open to allow air to flow into the buffer region. In such instances there will be a reduction in the composition of carbon dioxide within buffer region and an increased oxygen concentration within same.

As volumes of carbon dioxide are produced in the cargo region and passed across the membrane into the buffer region (and then expunged out of the container via the bidirectional flow means) the pressure within the cargo region will be reduced as the volumes of both the oxygen and carbon dioxide diminish.

Accordingly, and in a further preferred embodiment the controller may activate or deactivate a valve controlling a bi-directional flow means to open an inlet so that air may flow into the cargo region of the container. As the oxygen concentration within the container diminishes (as a result of normal aerobic respiration) or as the pressure operating within the cargo region diminishes an inlet located within the cargo compartment of the container may be opened to supply a quantity of fresh air into the container. The operation of such an inlet may be controlled by the controller which receives signals from a sensor adapted to sense the oxygen and/or carbon dioxide composition within a container.

Accordingly, by appropriately opening and closing container inlet(s) and outlet(s) the composition of gases within the container can be controlled. Such operation may be enabled using a controller and may be facilitated by a number of sensors which are adapted to detect the composition of gases within a container.

In addition, the provision of a selectively permeable membrane adapted to affix to the interior of the container will enable evacuation of carbon dioxide from the cargo region of the container into a gas buffer region. The gas buffer region can similarly be evacuated by operation of a bi-directional flow means operating as an outlet which may open and close to regulate the flow of air into the buffer region (from outside the container).

The term "sealable container" is used in the context of the present invention to designate a container which may be sealed to be gas proof.

The term "respiring products" is used in the context of the present invention to designate fresh fruit or vegetables and other respiring biological materials such as apples, bananas, broccoli, cauliflower, mushrooms, asparagus and lettuce.

It is acknowledged that the term "comprise" may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

**Description of the Preferred Embodiments**

The invention is now explained more in detail with reference to the drawings showing preferred embodiments of the invention.

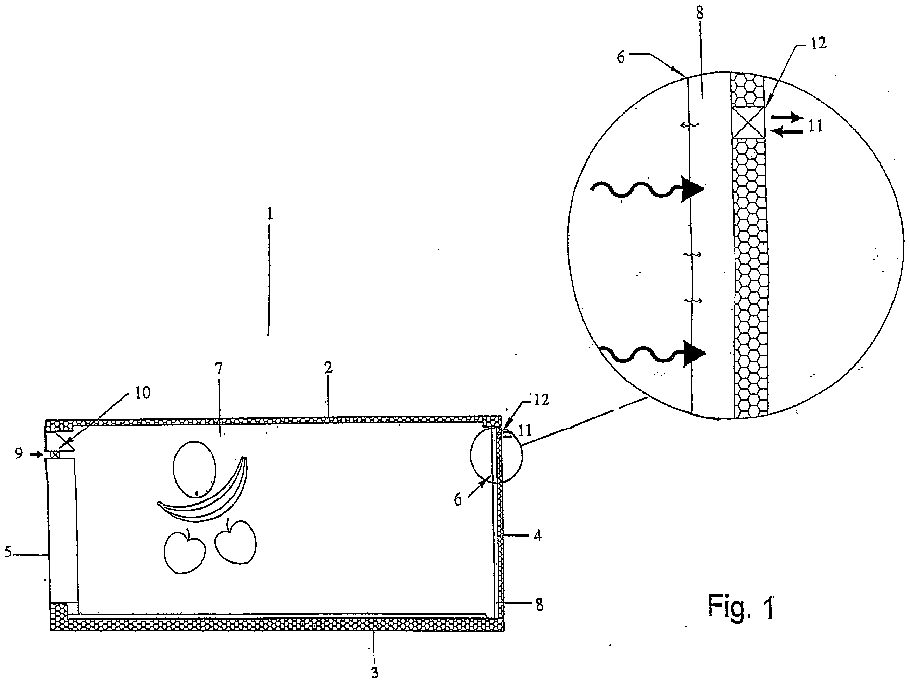

Figure 1 shows a container 1 which has elements of an apparatus installed as configured in accordance with a preferred embodiment of the present invention. The container 1 includes a roof 2, floor 3, two side walls (not shown), rear wall 4 (formed as a door) and a front wall 5.

Also shown is membrane 6 which is formed as a gas permeable plastic film. The membrane 6 is adapted to affix to the side walls, roof 2 and floor 3 of the container 1 to divide the container 1 into a storage region 7 and gas buffer region 8. Membrane 6 is configured to have greater permeability to carbon dioxide than to other gases that exist within container 1 (for example, oxygen, nitrogen, ethylene).

Also shown is bi-directional flow means 9 which includes valve 10 and is adapted to open to facilitate gas flows into or out of the container air into the cargo region 7 of the container. In addition, bi-directional flow means 11 is shown which serves as an inlet and outlet and is adapted under the operation of valve 12 to facilitate the flow of air into and/or out of gas buffer region 8.

In the embodiment shown, as the composition of carbon dioxide within the storage area 7 rises (for example, as a result of normal respiration), volumes of the carbon dioxide produced are conveyed via the membrane 6 to gas buffer region 8. Membrane 6 operates as a selectively permeable membrane having a greater permeability to carbon dioxide than to other gases prevailing in the container 1.

In a preferred embodiment of the invention a membrane 6 is used, where a permeability of carbon dioxide is at least eight times higher than the permeability of oxygen.

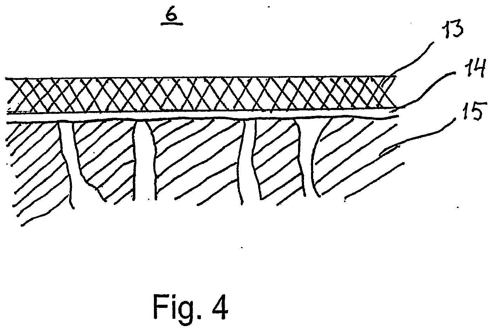

Figure 4 shows an embodiment of a suitable membrane 6 comprising a primary layer 13 attached to an intermediate layer 14 which again is attached to a secondary layer 15. The primary layer 13 is the selective layer determining the selectivity of the membrane 6. The intermediate layer 14 preferably has a permeability which is higher than the permeability for the primary layer 13 and most preferable with the same permeability as for the secondary layer 15. The secondary layer 15 is made of a porous material with a very high permeability.

The intermediate layer 14 is applied in a thin layer (preferably thinner compared to the primary layer 13) to the secondary layer 15 and is supposed to form a good adherence to the primary layer 13.

Cargo storage region 7 also preferably includes a sensor (not shown) which is adapted to poll the interior of the container to assess the composition of gases within the container. As the volume of oxygen decreases (as a result of normal aerobic respiration) within storage region 7 the sensor (not shown) will detect this occurrence and send an appropriate signal to a controller (not shown) which will activate or deactivate valve 10 to open flow means 9. By opening inlet 9 air will be supplied into the storage area 7, thereby increasing the oxygen content of same.

The composition of carbon dioxide typically increases within the storage region 7 of the container 1 due to normal respiration of perishables stored in the container. Such carbon dioxide will flow through the permeable membrane 6 into the gas buffer region 8, thereby reducing the volume and/or concentrations of carbon dioxide within the storage region 7.

Sensors appropriately located in the container are able to detect or sense when carbon dioxide levels within cargo region 7 and/or the gas buffer region 8 are at allowable levels. When the levels of carbon dioxide within the cargo region 7 and/or gas buffer region 8 become too high a sensor will send a signal to the controller to activate or deactivate valve 12 (associated with bi-directional flow means 11) to open which will facilitate the ingress of fresh air into the gas buffer region 8 as necessary and the evacuation of carbon dioxide from same.

As the concentration of carbon dioxide within the buffer region 8 falls below the concentration of carbon dioxide within the storage region 7 the flow of carbon dioxide from the storage region 7 through the permeable membrane 6 into the buffer region 8 will proceed, thereby reducing the composition of carbon dioxide within the storage region 7.

Therefore, use of the system in a container 1 will effectively manipulate the composition of gases within the container 1 such that the sum proportion of carbon dioxide and oxygen in the container may be varied from 21%. In particular the outgoing and/or ingoing air may be actively manipulated through the opening and/or closing of inlets and outlets which effectively control gas flows into and/or out of container 1 which facilitates the change in this sum proportion (of 21 %) as necessary.

The system including the apparatus makes it possible to use a method for controlling the composition of gases within a container 1, said container 1 including a plurality of walls, and at least one inlet and/or outlet 11, with an apparatus including at least one sensor, at least one controller and at least one gas permeable membrane 6 through which different parts of gasses at different rates can pass, a first region 7 and a second region 8, the first region 7 being for holding cargo and the second 8 region defining a gas buffer region, said at least one inlet and/or outlet 11 being in communication with said buffer region 8, the method comprising removing carbon dioxide from the first region 7 by use of a membrane 6, and regulating of the composition of gases in the enclosure is done by mixing the gas composition in the gas buffer region 8 with air from the ambient atmosphere.

In a further embodiment of the method the first region 7 and the second region 8 is divided or separated by the membrane 6.

The method further makes it possible to regulate and/or control the composition of gases in the enclosure by mixing the gas composition in the gas buffer region 8 and/or the cargo region 7 with air from the atmosphere is done by opening one or more valves to the ambient atmosphere.

Further it is possible to regulate and/or control the composition of gases in the enclosure by mixing the gas composition in the gas buffer region and/or the cargo region with a gas or a mixture of gasses from a supply source.

In effect, the above system provides an improved control method which can actively monitor the composition of gases in container 1 and provide an environment which can be optimized for the storage of container content.

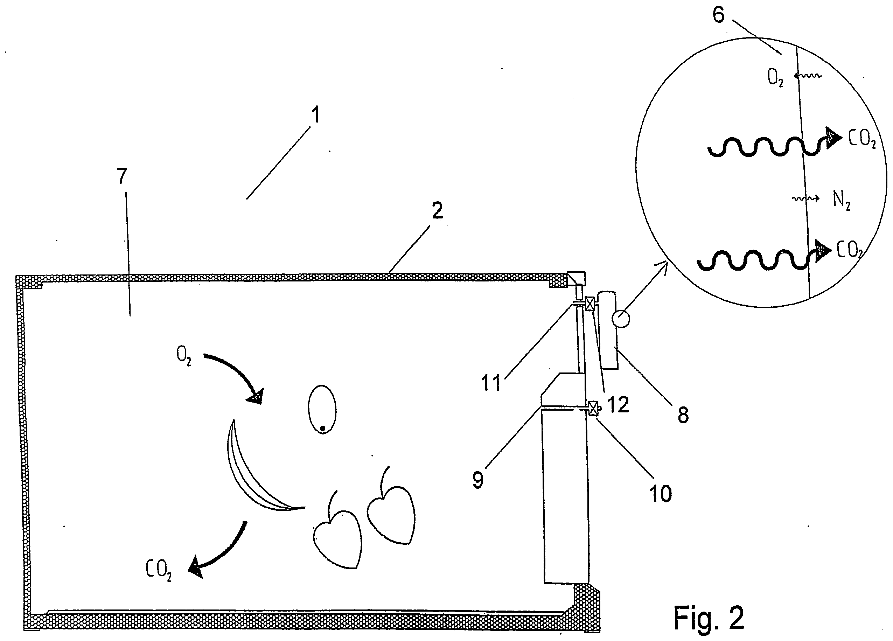

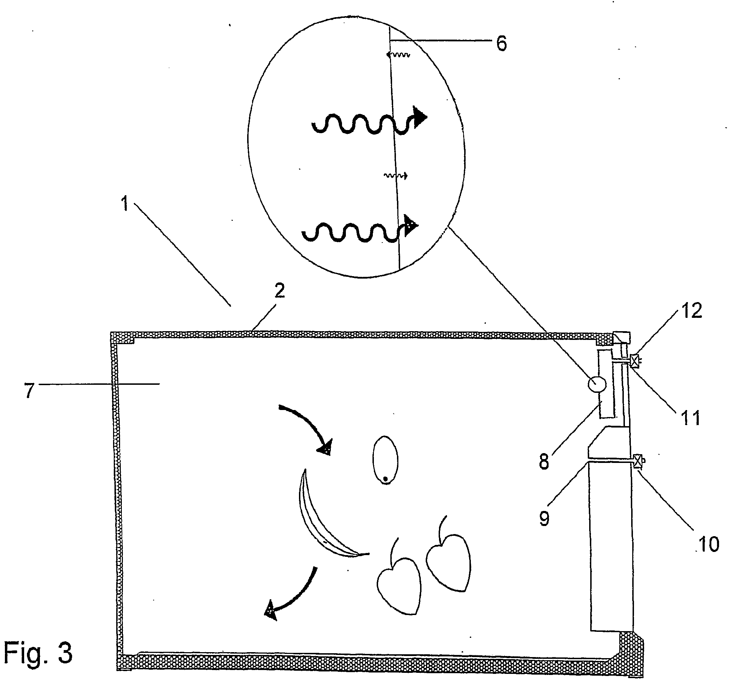

Referring to figure 2 and 3, instead of having the membrane 6 adapted to affix to the side walls, roof and floor of the container as described with reference to figure 1, the apparatus is a replaceable unit comprising a buffer region 8 which includes a selectively permeable membrane 6 either situated outside the container as showed in figure 2 or inside the container as shown in figure 3. The flow of the different gasses driven by the partial pressure difference across the membrane is indicated in the circles.

Furthermore, the system is able to effectively control the flow of gases into and/or out of a container to thereby promote a gaseous atmosphere in a container which will prolong the shelf life of stored produce - wherein the system provided is both relatively inexpensive to produce and to maintain.

Reference is now made to figure 4 showing a schematic cross-sectional view of a membrane 6, said membrane comprising a gas permeable membrane comprising a primary layer 13 determining the selectivity of the membrane, a secondary backing layer 15 of a microporous material with a very high permeability and an intermediate layer 14, said the primary layer being attached to the intermediate layer which again is attached to the secondary layer, said gas permeable membrane being permeable for oxygen and carbon dioxide at different flow rates. The primary layer 13 is made from a copolymer of a polyether and a polyamide.

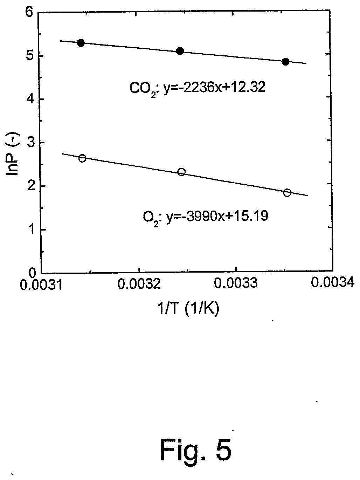

Figure 5 shows a graphic representation of the permeability of $CO_2$ and $O_2$ for a membrane produced in Example 1 as function of the temperature.

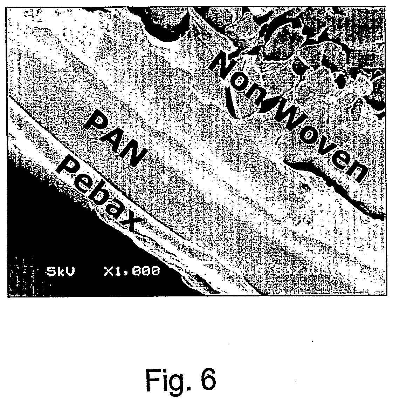

Figure 6 shows a SEM picture of an embodiment of a membrane produced in Example 1. In this embodiment, the membrane comprises a primary layer designated "Pebax" determining the selectivity of the membrane, an intermediate layer designated "PAN" and a secondary backing layer designated "Non Woven" with a very high permeability.

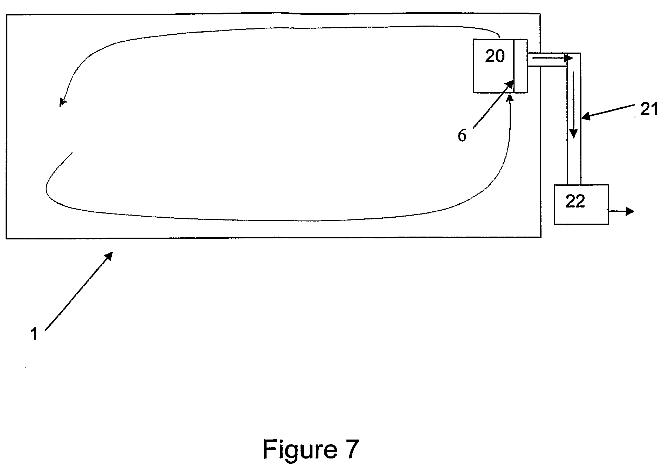

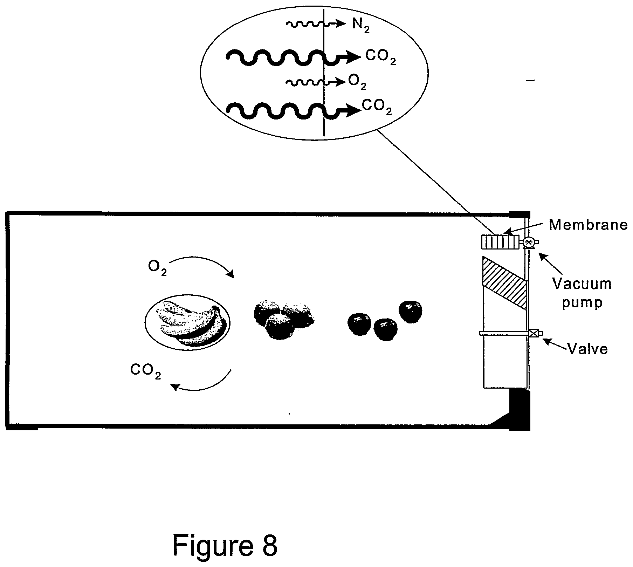

Reference is made to figures 7 and 8. Figure 7 schematically shows an embodiment of a container 1 according to the invention equipped with a unit 20 comprising a buffer region and a selectively permeable membrane 6 situated inside the container, the outlet of the buffer region being connected via a pipe 21 to a vacuum pump 22.

Figure 8 shows an embodiment of a container according to the invention equipped with a unit 20 comprising a buffer region and a selectively permeable membrane situated inside the container, the outlet of the buffer region being connected to a vacuum pump 22. When sucking off gas using the vacuum pump, gas is removed from the inside of the container and replaced by ambient atmospheric air entering through natural gaps or slots in the container, e.g. around the doors thereof or through a valve 10. In the circle is indicated the flow of the different gasses across the membrane when applying a vacuum.

It is to be understood that a vacuum pump may be placed inside the container, outside the container or attached directly to the wall of the container.

Aspects of the present invention have been described by way of example only and it should be appreciated that modifications and additions may be made thereto without departing from the scope thereof.

## MATERIALS AND METHODS

PEBAX® 1074: a plasticizer free polyamide-12 based thermoplastic block copolymer with a PEG ether segment having a melt flow of 14g/10 min at 235 °C/1 kg load and a melting point of 158 °C and hardness 40 shore D available from ARKEMA BV, Ottho Heldringstraat 41, NL-1066 XT Amsterdam, The Netherlands.

PEBAX® 2533: a plasticizer free poly(ether-B-amide) thermoplastic block copolymer with a PEG ether segment having a melt flow of 14g/10 min at 235 °C/1 kg load and a melting point of 134 °C and hardness 25 shore D manufactured by Arkema.

Intermediate material:

Polyacrylonitrile (PAN) backing material GKSS HV II having a molecular weight cut off (MWCO) of 50 kDa and GKSS HV III having a MWCO of 30 kDa available from GMT Membrantechnik GmbH, Am Rhein 5, D-79618 Rheinfelden, Germany.

Polyether imide backing material available as PEI from Jurima GmbH, Am Mittleren Moos 19, D-86167 Augsburg, Germany.

Backing materials:

Teslin® films are highly filled microporous polyolefin-based films having high density (HD) or low density SP 700, SP 800 and SP1000 having a thickness of 7 mils, 8 mils and 10 mils, respectively available from PPG, One PPG Place, Pittsburgh, Pa 15272, USA

A PVDF backing material available from Millipore, 290, Concord Rd., Billerica, Ma 01821, USA

Polyester of polypropylene non woven materials available as Ultraflo® polypropylene materials from BBA Fiberweb, 1 Victoria Villas, Richmond-on Thames, London TW8 2GW, UK having a basis weight from 15 to 88 grams per square meter.

Solvent in the form of an essentially water free alcohol such as

Ethanol, pure, 99.99%

n-Propanol, pure, 99.99%

n-Butanol, pure, 99.99%

or mixtures thereof

Poly dimethyl siloxane silicon rubber (PDMS) from ARKEMA BV, Ottho Heldringstraat 41, NL-1066 XT Amsterdam, The Netherlands.

**Determination of gas permeability**

The polymer membrane was mounted in a flat, thermostat-controlled cell in the gas permeation set-up in which circular specimen were placed on flanges that were clamped together. At the permeate side of the cell, vacuum (<0.05 mbar) was applied using a high vacuum pump (Edwards). An absolute pressure of 1 bar was applied at the feed side. The temperature of the thermostat-controlled cell was adjusted to the desired value. The effective membrane area was 11.95 $cm^2$. Measurement of the permeability was carried out by closing the valve to the vacuum pump and measuring the increase in pressure in a calibrated volume as a function of time. The increase in pressure was used to calculate the absolute amount of gas that has permeated through the membrane. When this amount was normalized for the membrane area, measurement time and the pressure difference over the membrane, the permeability in cm3/cm2*s*cm-Hg could be calculated.

When measuring the permeability of thin membranes, a specimen was clamped between two flanges of a thermostat-controlled cell in the gas permeation set-up and the gas to be tested was applied at the top side of the membrane at a pressure of 1 bar. The permeate side of the membrane was connected to a soap bubble permeate meter and permeated amount of gas was measured.

Using the ideal gas law and the intrinsic gas permeability of the polymer it is possible to calculate the permeability for a given gas and the effective membrane thickness for a given membrane.

**Example 1**

Preparation of a membrane for use in relation to the invention

PEBAX® 1074 was used to prepare membranes with a high $CO_2$ permeability and a high $CO_2/O_2$ selectivity. The polymer was dissolved in a suitable solvent (1 and 3 w% PEBAX® 1074 in 75/25 w/w n-propanol/n-butanol) at 75 °C, because the solution was only stable at elevated temperatures. Poly acrylonitrile (PAN) was used as backing material for composite membrane preparation (mean pore size 6.7 nm, MWCO 30 kDa) and coating of this backing with an ultra thin layer was also performed at 75°C. Pieces of 15x15 cm of PAN backing were secured to glass plates (PAN layer upwards) by means of PVC tape along the edges of the piece. The plates were submersed vertically into the coating solution for 2 seconds. If required a further coating layer was applied (each time after one hour of intermediate drying in nitrogen atmosphere). Finally, the membranes were dried horizontally in a box under nitrogen atmosphere for 24 hours. Circular samples (diameter 5 cm) were cut from the middle part of the coated backing and were used in gas permeation measurements to determine the $N_2$ and $CO_2$ permeability. Scanning Electron Microscopy (SEM) was used to elucidate the layer structure of the prepared composite membranes.

To determine the contribution of the backing material to the overall resistance to gas permeation through the composite membrane, the gas permeability of the uncoated backing material was also determined.

In order to determine the intrinsic gas permeability of PEBAX® 1074, thick, dense polymer films were prepared. A hot 3 w% PEBAX® solution was cast into a petri dish and the dish was placed in a box under nitrogen stream for 3 x 24 hours to allow evaporation of the solvent. The film was peeled of the dish using ethanol and dried at 50°C in a vacuum oven for 24 hours. Circular samples were cut from the film and the thickness of each sample (125 - 145 $\mu$m) was determined with a micrometer gauge. Finally, the gas permeability of $CO_2$ and $O_2$ of these films was determined at 25, 35 and 45°C.

Based on the intrinsic gas permeability of the dense films and the flux data of the composite membranes, the effective membrane thickness of the composite membranes was calculated using equation 1:

$$P = \frac{J \cdot l}{\Delta p \cdot A} \qquad (1)$$

wherein

P Intrinsic permeability of PEBAX® 1074, as determined from the permeability measurements using dense films ($cm^3 \cdot cm/cm^2 \cdot s \cdot cmHg$).
J Gas flux through the composite membrane ($cm^3/s$)
I Effective composite membrane thickness (cm)
$\Delta p$ Pressure difference over the membrane (driving force) (cmHg)
A Membrane surface area ($cm^2$)

*Results*

The gas fluxes of the prepared composite membranes were determined ($\Delta p$ = 1 bar), T = 25°, gases: $CO_2$ and $N_2$). The $N_2$-flux through the membrane was often too low to perform accurate measurements. The results are summarized in the below Table 1. Different coating procedures were followed and these procedures are also stated in Table 1.

Table 1: Gas fluxes of the composite membranes

| Sample # | $\Delta$P [bar] | $CO_2$ flow [$cm^3$/min] | $N_2$ flow [$cm^3$/s] | T [°C] | $CO_2$ flow [GPU] | Remark |
|---|---|---|---|---|---|---|
| 1 | 1 | - | - | 25 | leak | 1x with 1% solution |
| 2 | 1 | - | - | 25 | leak | |
| 3 | 1 | 9.80 | 0.163 | 25 | 181 | 2x with 1% solution |
| 4 | 1 | 8.82 | 0.147 | 25 | 163 | |
| 5 | 1 | 4.29 | 0.072 | 25 | 79 | 3x with 1% solution |
| 6 | 1 | 4.44 | 0.074 | 25 | 82 | |
| 7 | 1 | 3.43 | 0.057 | 25 | 63 | 1x with 3% solution |
| 8 | 1 | 4.14 | 0.069 | 25 | 76 | |
| 9 | 1 | 3.75 | 0.063 | 25 | 69 | |
| 10 | 1 | 4.21 | 0.070 | 25 | 78 | |
| 11 | 1 | 3.08 | 0.051 | 25 | 57 | |
| 12 | 1 | 3.87 | 0.065 | 25 | 71 | |
| 1 GPU= 1•10-6 $cm^3$ (STP)/$cm^2$•s•cmHg, STP = 0°C, 76 cmHg | | | | | | |

As can be observed from Table 1 above, a minimum number of coating steps (3x1 w% solution) or a minimum concentration of the coating solution (1x3 w% solution) is required to obtain defect free composite membranes with PEBAX® 1074.

In order to determine the intrinsic gas permeability of PEBAX® 1074, gas permeation measurements with dense PEBAX® 1074 membranes were performed at 25, 35 and 45 °C. The results are summarized in the below Table 2.

Table 2: Intrinsic gas permeability of dense PEBAX® 1074 films at 25, 35 and 45 °C.

| T [°C] | $P_{CO2}$ [Barrer] | $P_{O2}$ [Barrer] | Selectivity ($CO_2/O_2$) | 1/T [$K^{-1}$] | ln $P_{CO2}$ | ln $P_{O2}$ |
|---|---|---|---|---|---|---|
| 45 | 197 | 13.9 | 14.2 | 0.003143 | 5.28 | 2.63 |
| 35 | 160 | 9.8 | 16.3 | 0.003245 | 5.07 | 2.28 |

(continued)

| T [°C] | $P_{CO2}$ [Barrer] | $P_{O2}$ [Barrer] | Selectivity ($CO_2/O_2$) | 1/T [K$^{-1}$] | ln $P_{CO2}$ | ln $P_{O2}$ |
|--------|--------|--------|--------|--------|--------|--------|
| 25 | 123 | 6.0 | 20.5 | 0.003354 | 4.81 | 1.79 |

Based on the data summarized in Table 2 and assuming an Arrhenius type of relation between the temperature and the gas permeability (Equations 2 and 3 below), the $CO_2$ and $O_2$ permeability and the $CO_2/O_2$ selectivity's can be determined as a function of the temperature.

$$P = A \cdot e^{\frac{-B}{R \cdot T}} \qquad (2)$$

or

$$\ln P = \ln A - \frac{B}{RT} \qquad (3)$$

The results are presented graphically in figure 5.

After extrapolation of the data generated at higher temperatures, the permeability and selectivity's at lower temperatures (0°C) can be calculated. These results are summarized in the below Table 3:

Table 3: $CO_2$ and $O_2$ permeability and selectivity as a function of the temperature. Data obtained via extrapolation of experimental data obtained at higher temperatures.

| T [°C] | $CO_2$ Permeability [Barrer] | $O_2$ Permeability [Barrer] | Selectivity ($CO_2/O_2$) |
|--------|--------|--------|--------|
| 0 | 62 | 1.8 | 34.7 |
| 10 | 83 | 3.0 | 27.7 |
| 20 | 109 | 4.9 | 22.4 |
| 30 | 140 | 7.6 | 18.4 |
| 40 | 177 | 11.6 | 15.3 |
| 50 | 221 | 17.2 | 12.8 |
| 60 | 272 | 24.9 | 10.9 |
| 70 | 331 | 35.3 | 9.4 |

Table 3 clearly shows that the permeability for both $CO_2$ and $O_2$ strongly increases with increasing temperature, whereas the selectivity decreases with increasing temperature. A minimum selectivity of 8 can be easily reached with PEBAX® 1074.

Based on the intrinsic permeability data, the thickness of the prepared composite membrane could be calculated (Equation 1). The thickness of several membranes is shown in the below Table 4.

Table 4: Calculated effective composite membrane thickness. Sample numbers shown correspond to the numbers shown in Table 1. T = 35°C.

| Sample # | Normalized $CO_2$ flux [GPU] | Normalized $O_2$ flux [GPU] | Calculated selectivity ($CO_2/O_2$) | Calculated coating thickness ($CO_2$) [$\mu$m] | Calculated coating thickness ($O_2$) [$\mu$m] | Remark |
|--------|--------|--------|--------|--------|--------|--------|
| 3 | 170 | 16.6 | 10.2 | 0.94±0.17 | 0.59±0.07 | 2x 1w% solution |
| 4 | 149 | 11.8 | 12.6 | 1.07±0.13 | 0.83±0.10 | |
| 5 | 89 | 6.7 | 13.3 | 1.80±0.22 | 1.46±0.18 | 3x 1w% solution |

(continued)

| Sample # | Normalized CO$_2$ flux [GPU] | Normalized O$_2$ flux [GPU] | Calculated selectivity (CO$_2$/O$_2$) | Calculated coating thickness (CO$_2$) [μm] | Calculated coating thickness (O$_2$) [μm] | Remark |
|---|---|---|---|---|---|---|
| 10 | 73 | 5.1 | 14.3 | 2.19±0.17 | 1.92±0.16 | 1x 3w% solution |
| 11 | 61 | - | - | 2.62±0.20 | - | |
| 12 | 65 | 4.4 | 14.8 | 2.46±0.19 | 2.23±0.19 | |

As can be observed in Table 4, the average thickness of the composite membranes is around 2 μm, which is quite thin taking into account that no pre-treatment of the backing was applied to prevent penetration into the pores of the backing.

To elucidate the contribution of the backing material to the resistance to gas permeation through the composite membrane, the gas permeability of the backing material without a coating layer was determined at 25°C. The uncoated backing had a normalized CO$_2$ flux of 71000 GPU. On average, this value is 1000 times higher than the values obtained for composite membranes. Thus, the contribution of the backing material to the total gas permeability is thus negligible.

Finally, the structure of the prepared composite membranes was investigated with Scanning Electron Microscopy (SEM). A SEM picture of one of the prepared membranes is shown in Figure 6 of the drawings and shows a SEM picture of a prepared composite membrane with a PEBAX® 1074 top layer.

The picture shown in Figure 6 is only for illustrating the structure of composite membranes prepared for use in relation to the invention and is not to be construed as a limitation of the scope of the invention as set forth in the claims. The top layer of this membrane is rather thick (∼10 μm) in order better to be able to distinguish the top layer. The adhesion between the PEBAX® 1074 layer and the backing material is good and no delaminating of the layers occurred.

## Example 2

Preparation of a membrane for use in relation to the invention

In order to increase the selectivity of the membranes, composite membranes using another type of PEBAX® copolymer with a higher permeability for CO$_2$ were prepared using dip coating as described in Example 1.

PEBAX® 2533 was used to prepare membranes with a higher CO$_2$ permeability and a reasonable CO$_2$/O$_2$ selectivity. The polymer was dissolved in a suitable solvent (1, 3 and 6 w% PEBAX® 2533 copolymer in 75/25 w/w n-propanol/n-butanol) at 75 °C, because the solution was only stable at elevated temperatures. Dense films were prepared according to the method described in Example 1 to determine the intrinsic gas permeability.

In order to further decrease the thickness of the coating layer and increase the permeability, a thin layer of a second polymer with an extremely high permeability but lower permeability selectivity was applied onto a backing film. Poly dimethyl siloxane (PDMS, silicon rubber) was used for this purpose. A first layer that already covers the larger holes of the backing layer would allow the coating of thinner defect free layers of PEBAX® 2533 copolymer. The PDMS layer was also applied using dip coating.

Poly acrylonitrile (PAN) was used as backing material for composite membrane preparation (mean pore size 6.7 nm, MWCO 30 kDa). Pieces of 15x15 cm of PAN backing were secured to glass plates (PAN layer upwards) by means of PVC tape along the edges of the piece. The plates were submersed vertically into the coating solution (1 w% PDMS (RTV type) in n-hexane) for 2 seconds and after that PDMS was cross linked at 65°C for 3 hours. A second layer of PDMS was applied using the same protocol but a concentration of 7%, resulting in an effective membrane thickness of approx. 2.5 μm. After the PDMS layers, a thin layer of PEBAX® 2533 copolymer was applied, using the same procedure as described in Example 1 for PEBAX® 1074 copolymer. If required a further coating layer was applied (each time after one hour of intermediate drying in nitrogen atmosphere). Finally, the membranes were dried horizontally in a box under nitrogen atmosphere for 24 hours. Circular samples (diameter 5 cm) were cut from the centre part of the coated backing and were used in gas permeation measurements to determine the N$_2$ and CO$_2$ permeability.

Finally, in order to produce larger samples of composite membranes for use in relation to the invention, PEBAX® 2533 coating layers were applied on A4 sheets of PAN backing using the same dip coating procedure as disclosed above. The polymer was dissolved in ethanol and the coating layer was applied at a temperature of approximately 50°C. For comparison, new dense films were prepared, using this ethanol solution and the intrinsic permeability was determined again.

Results

Coating of PEBAX® 2533 copolymer on top of a PAN backing coated with a thin layer of PDMS turned out not to be possible. Wetting of the hydrophobic PDMS layer with the coating solution did not occur and dense, defect free layers could not be produced.

Dense films of PEBAX® 2533 copolymer could be prepared and the intrinsic gas permeability was determined. The results are summarized in the below Table 5 and for comparison, the values for PEBAX® 1074 copolymer are also stated.

Table 5: Intrinsic gas permeability of PEBAX® 1074 and 2533 membranes measured at 35°C and 2 bar.

| Type of polymer | $CO_2$ Permeability [Barrer] | $O_2$ Permeability [Barrer] | Selectivity ($CO_2/O_2$) |
|---|---|---|---|
| PEBAX® 1074 propanol/ethanol | 160 | 9.8 | 16.3 |
| PEBAX® 2533 propanol/ethanol | 200 | 21.5 | 9.3 |
| PEBAX® 2533 ethanol | 299 | 33.2 | 9.0 |
| PEBAX® 2533 ethanol | 340 | 38.3 | 8.9 |
| PEBAX® 2533 ethanol | 230 | 25.5 | 9.0 |
| Average PEBAX® 2533 ethanol | 290 | 32.3 | 9.0 |

The permeability of a PEBAX® 2533 membrane is considerably higher than the permeability of a PEBAX® 1074 membrane and strongly depends on the solvent used. The use of ethanol as solvent resulted in 50% higher permeability than the use of propanol/butanol mixtures as solvent. Ethanol was therefore used as solvent to prepare A4 size composite membranes. Different coating procedures were applied and the gas permeability of the prepared membranes were determined (Table 6).

Table 6: Coating procedure and normalized gas fluxes of A4 sized samples of composite membranes

| Coating type | A4 Sample # | Normalized flux [GPU] at 25°C | | Selectivity |
|---|---|---|---|---|
| | | $CO_2$ | $N_2$ | |
| I | 13 | 197 | 25.5 | 7.8 |
| | 14 | 170 | 9.3 | 18.3 |
| II | 15 | 168 | 6.3 | 26.6 |
| | 16 | 161 | 5.9 | 27.2 |
| III | 17 | 251 | 13.3 | 18.9 |
| | 18 | 236 | 11.1 | 21.3 |

| Coating Type | Procedure |
|---|---|
| I | 1x3 w% solution |
| II | 2x2 w% solution |
| III | 1x2 w% solution, 1x1 w% PDMS solution, cross-linking |

Based on the results shown in Table 6, coating procedure number II resulted in A4 size, defect free composite membranes. Four new A4 samples were prepared using this procedure.

Conclusions

Composite membranes comprising a PEBAX® 1074 membrane were prepared successfully and resulted in selective membranes with an effective thickness of approximately 2 μm. $CO_2/O_2$ selectivity's of these materials were as required. Permeability, however, were too low for some applications. Composite membranes prepared using PEBAX® 2533 copolymer as selective layer resulted in considerably higher fluxes, especially when ethanol was used as solvent during preparation, and only a small decrease in selectivity was experienced. The selectivity still meets the requirements. A4 sized composite membranes with a PEBAX® 2533 selective top layer prepared from an ethanol solution, were prepared successfully using the same procedure for small scale membrane preparation.

### Example 3

Preparation of membranes for use in relation to the invention using different backing materials

In order to increase the selectivity of the membranes, composite membranes using another type of PEBAX® copolymer with a higher permeability for $CO_2$ were prepared using dip coating as described in Examples 1 and 2.

Pure gas permeation experiments were carried out at T = 22°C and a feed pressure of -0.5 bar using composite membranes having various types of backing material and being prepared using dip coating as described in Example 1.

Samples of highly filled microporous polyolefin-based backing materials (Teslin® films 10, 8 and 7 mils available from PPG and hydrophobic PVDF backing materials available from Millipore Millipore were compared with the polyaccylonitrile backing material tested in Examples 1 and 2 and a further polyacrylonitrile (PAN) material, GKSS HV II having a higher molecular weight. The normalized fluxes of carbon dioxide and nitrogen were measured in the same manner as in Example 1. The results appear from the below Table 7.

Table 7

| Sample | Normalized gas flux [GPU] | | Calculated ideal selectivity |
|---|---|---|---|
| | $CO_2$ | $N_2$ | $CO_2/N_2$ |
| Teslin® HD 356 $\mu$m (14 mils) | 9 ± 1 | - | - |
| Teslin® 254 $\mu$m (10 mils) | 3560 ± 250 | 4420 ± 200 | 0.81 |
| Teslin® 203 $\mu$m (8 mils) | 4340 ± 200 | 5270 ± 300 | 0.82 |
| Teslin® 178 $\mu$m (7 mils) | 6050 ± 300 | 7380 ± 400 | 0.82 |
| Millipore PVDF hydrophobic 0.1 $\mu$m | >250,000 | - | - |
| GKSS HVIII (MWCO 30 kDa) | 71,000 ± 4300 | - | - |
| GKSS HVII (MWCO 50 kDa) | 92,000 ± 7500 | - | - |

The low density Teslin® membranes show ideal selectivity for $CO_2/N_2$ permeability of -0.82. This means that pure Knudsen flow is occurring and that the materials have no pinholes.

Teslin® 7 mil film is suitable for use as a backing material for a PEBAX® coating. Although the resistance for gas permeability of this backing is much higher than for GKSS material, Teslin® 7 mil film is sufficiently permeable to obtain a high flux and selectivity as indicated below.

Estimated results at 20°C for a Teslin® layer (7mils) coated with a PEBAX® layer

A 1 $\mu$m thick layer of PEBAX® 2533 polymer (at 20°C) is estimated to have (see Resume 5) a normalized $CO_2$ flux of 220, a GPU normalized $O_2$ flux of 20, and a GPU selectivity $CO_2/O_2$ of 11.0.

A 1 $\mu$m thick layer of PEBAX® 2533 polymer (at 20°C), coated on Teslin® 7 mils, is estimated to have a normalized $CO_2$ flux of 212.3 GPU, a normalized $O_2$ flux: 19.94 GPU, and a selectivity $CO_2/O_2$: 10.65.

These estimates are made under the assumption that the permeability of the backing at 20°C is almost the same as for 22°C and the $O_2$-flux through the backing is 6900 GPU at 22°C due to pure Knudsen flow.

### Example 4

Preparation of membranes for use in relation to the invention using different backing materials

A composite membrane was made in analogy with the method described in Examples 1 and 2 using a PEBAX® 1074/2533 copolymer dissolved in 99-99.95% ethanol (pure ethanol), pieces of 15x15 cm of PEI backing material applied to an Ultraflo® polyester backing

Adding lithium chloride in an amount of 0.01 to 0.6% increased the solubility of the PEBAX® copolymer in ethanol and improved the coating properties of the solution.

### Examples 5-7

Experiments controlling the composition of the air inside containers in accordance with the invention using loosely packed broccoli and potatoes and bananas packed in "banana vacuum bags" made from PEHD, respectively.

Experiments were carried out using a cooled container of a volume of 1 m$^3$ for broccoli and 40' standard cooling containers in accordance with figures 3, and 7/8 equipped with a module comprising a membrane made in accordance with Example 4 using a PEBAX® 2533 copolymer having an average thickness of 2.5 $\mu$m and an area of about 14 m$^2$ for potatoes and bananas.

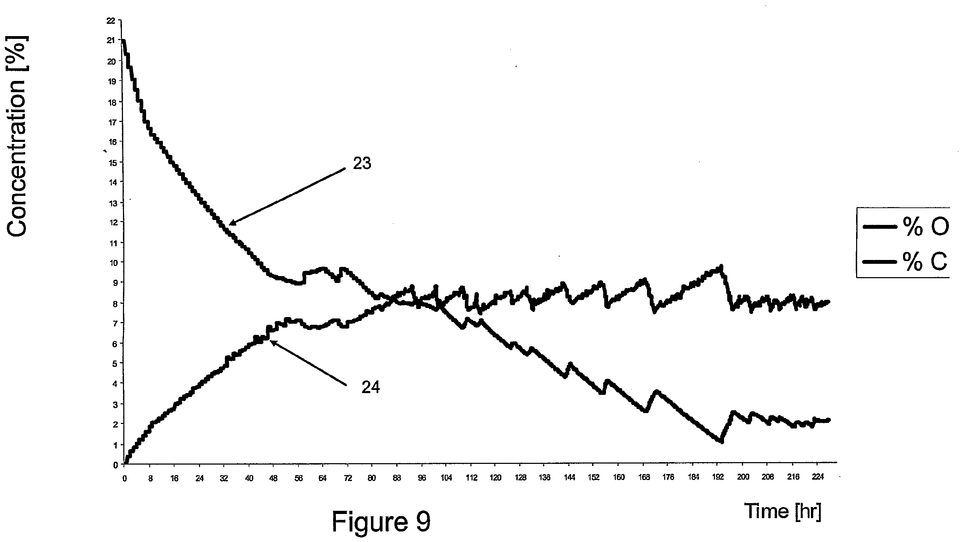

The 1 m3 container was filled with broccoli in Example 5 and 17 metric tons of potatoes or bananas were placed in the 40' standard cooling containers in Examples 6 and 7, respectively. In Example 5 no vacuum pump was used and flow across the membrane was driven by the partial pressure difference of the gasses. In Example 6 the container was initially left for one day and was then flushed with nitrogen. First set points of about 5% carbon dioxide and about 2% oxygen were then used for activating the vacuum pump and after about 7.5 days, a reset set point for carbon dioxide of about 3.5% was applied. In Example 7 vacuum was applied using a set point for carbon dioxide of about 3.5% for controlling the vacuum pump for sucking off gas from the gas buffer region. The results are shown in figures 9, 10 and 11 showing graphical representations of the change of concentrations of oxygen 23 and carbon dioxide 24 inside the container as a function of time for the experiment in Example 5, example 6, and Example 7, respectively.

In Example 5 (figure 9) the concentration of oxygen fell due to respiration of the broccoli and the concentration of carbon dioxide increased to an equilibrium of about 8-9% controlled by flushing the buffer region with atmospheric air as a function of the carbon dioxide level in the container. The set point for carbon dioxide was about 9% and the set point for oxygen was about 2%. Equilibrium was reached after about 200 hours.

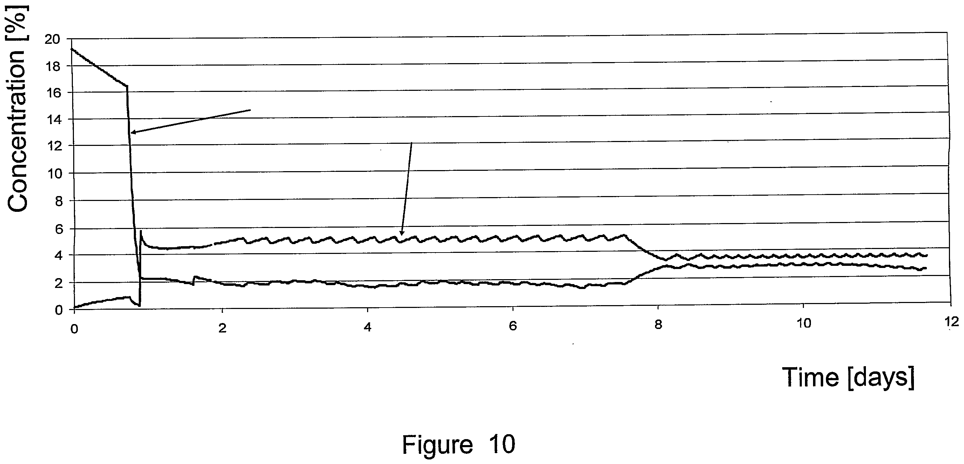

In Example 6 (figure 10) the concentration of oxygen fell due to respiration of the potatoes and after flushing the concentration of oxygen stabilized at a level of about 2%, slightly falling over time, and the concentration of carbon dioxide increased to equilibrium of about 5%. After resetting the set point for carbon dioxide after about 7.5 days new equilibrium levels of about 3% were reached for both oxygen and nitrogen, again slightly falling over time for oxygen.

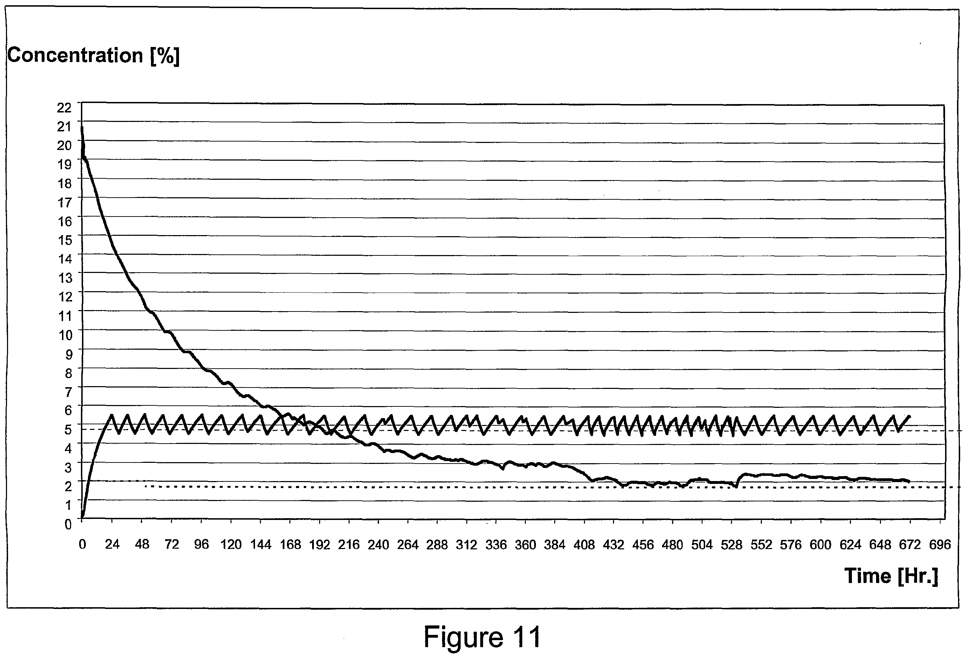

In Example 7 (figure 11) the concentration of oxygen fell due to respiration of the bananas and stabilized at a level of about 2% and the concentration of carbon dioxide increased to equilibrium of about 5% controlled by the carbon dioxide concentration set point and the vacuum pump.

The reduced levels of especially carbon dioxide obtained when utilizing the present invention improved the keeping the quality of the tested vegetables and fruits reducing the losses during sea-borne carriage of fresh fruit and vegetables.

## Summary Listing of References

WO 2004/107868 A1 (Mærsk Container IndustriAS)
US Patent No. 6,376,032 B1 (CLARKE et al.)
VIGILD et al. "Selvorganiserende polymerer - skabeloner til nanoporøse materialer" Dansk Kemi, 85, No. 11, 2004, ISSN: 0011-6335, pages 32-34

## Claims

1. An apparatus for controlling the composition of gases within a sealed container, said container including a plurality of walls, said apparatus having at least one inlet and/or outlet, the apparatus including at least one sensor, at least one controller and at least one gas permeable membrane through which membrane different gasses can pass at different rates, said container comprising a first region for holding cargo and apparatus and membrane defining a second gas buffer region, said at least one inlet and/or outlet being in communication with said buffer region and said membrane being permeable permitting for oxygen and carbon dioxide at different flow rates, where permeability is measured in accordance with the experimental section in the description, said membrane comprising a layer determining the selectivity of the membrane, wherein said layer of the membrane is made from a copolymer of a polyether and a polyamide.

2. An apparatus according to claim 1, wherein the membrane comprises a primary layer determining the selectivity of the membrane and a secondary backing layer of a microporous material with a very high permeability, not being limiting for the permeability of the relevant gasses.

3. An apparatus according to claim 2, wherein the membrane comprises an intermediate layer, wherein the primary layer is attached to the intermediate layer which again is attached to the secondary layer.

**4.** An apparatus according to any of claims 1-3, wherein the membrane has a permeability value for $CO_2$ of 50-600 barrer ($1\cdot10^{-10}$ $cm^3\cdot cm/cm^2\cdot s\cdot cmHg$) and a permeability for carbon dioxide, which is at least eight times higher than the permeability for oxygen, where permeability is measured in accordance with the experimental section in the description.

**5.** An apparatus according to any of claims 1-4, wherein the membrane has permeability for carbon dioxide, which is at least 9.5 times higher than the permeability for oxygen, where permeability is measured in accordance with the experimental section in the description.

**6.** An apparatus according to claim 5, wherein the membrane has a permeability for carbon dioxide, which is at least 19 times higher than the permeability for oxygen, where permeability is measured in accordance with the experimental section in the description.

**7.** An apparatus according to claim 6, wherein the membrane has a permeability for carbon dioxide, which is at least 30 times higher than the permeability for oxygen, where permeability is measured in accordance with the experimental section in the description.

**8.** A method for controlling the composition of gases within a sealed container, said method comprising providing the container with an apparatus including at least one inlet and/or outlet, at least one sensor, at least one controller and at least one gas permeable membrane through which membrane different gasses can pass at different rates, said container comprising a first region for holding cargo, and said apparatus and membrane defining a second buffer region, said at least one inlet and/or outlet being in communication with said buffer region and said membrane being permeable permitting for oxygen and carbon dioxide at different flow rates, said membrane comprising a layer determining the selectivity of the membrane, wherein the membrane is made from a copolymer of a polyether and a polyamide, said method comprising a continuous or intermittent replacement of a part of or all the gas of the buffer region with gas from the ambient air, where permeability is measured in accordance with the experimental section in the description.

**9.** A method according to claim 8, wherein the membrane comprises a primary layer determining the selectivity of the membrane and a secondary backing layer of a microporous material with a very high permeability, not being limiting for the permeability of the relevant gasses.

**10.** A method according to claim 8 or 9, wherein the membrane has a permeability value for $CO_2$ of 50-600 barrer ($1\cdot10^{-10}$ $cm^3\cdot cm/cm^2\cdot s\cdot cmHg$) and a permeability for carbon dioxide, which is at least eight times higher than the permeability for oxygen, where permeability is measured in accordance with the experimental section in the description.

**11.** A method according to any of claims 8-10, wherein regulation of the composition of gases in the first region is effected by mixing the gas in the gas buffer region and/or the cargo region with air from the atmosphere by opening one or more valves to the ambient atmosphere.

**12.** A method according to any of claims 8-11 wherein the regulation of the composition of gases in the first region is effected by mixing the gas composition in the gas buffer region and/or the cargo region with a gas or a mixture of gasses from a source having a different composition of gases.

**13.** A method according to any of claims 8-12, which has at least one of the following characteristics

(i) measuring the content of carbon dioxide in the buffer region and if necessary mixing, diluting or replacing the gas in the buffer region and/or the cargo region with air from the outside atmosphere;
(ii) measuring the content of carbon dioxide in the cargo region and if necessary mixing, diluting or replacing the gas in the buffer region and/or the cargo region with air from the outside atmosphere;
(iii) measuring the content of oxygen in the buffer region and if necessary mixing, diluting or replacing the gas in the buffer region and/or the cargo region with air from the outside atmosphere;
(iv) measuring the content of oxygen in the cargo region and if necessary mixing, diluting or replacing the gas in the buffer region and/or the cargo region with air from the outside atmosphere.

**14.** A method according to claim 8, said method comprising establishing a sub-atmospheric pressure in the buffer region sucking off gas from the first region of the container through the membrane.

**15.** A method according to claim 14, wherein the membrane comprises a primary layer determining the selectivity of the membrane and a secondary backing layer of a microporous material with a very high permeability, not being limiting for the permeability of the relevant gasses.

**16.** A method according to claim 14 or 15, wherein the membrane has a permeability value for $CO_2$ of 50-600 barrer ($1 \cdot 10^{-10}$ $cm^3 \cdot cm/cm^2 \cdot s \cdot cmHg$) and a permeability for carbon dioxide, which is at least eight times higher than the permeability for oxygen, where permeability is measured in accordance with the experimental section in the description.

**17.** A method according to any of claims 14-16, which has at least one of the following characteristics

(i) measuring the content of carbon dioxide in the buffer region and if necessary sucking off gas in the buffer region and the cargo region through the membrane;
(ii) measuring the content of carbon dioxide in the cargo region and if necessary sucking off gas in the buffer region and the cargo region through the membrane;
(iii) measuring the content of oxygen in the buffer region and if necessary sucking off gas in the buffer region and the cargo region through the membrane;
(iv) measuring the content of oxygen in the cargo region and if necessary sucking off gas in the buffer region and the cargo region through the membrane.

**18.** A sealable container having a plurality of walls, and at least one inlet and/or outlet, said container including an apparatus for controlling the composition of gases within the container, the apparatus including at least one sensor, at least one controller and at least one gas permeable membrane comprising a primary layer determining the selectivity of the membrane and a secondary backing layer of a microporous material with a very high permeability, not being limiting for the permeability of the relevant gasses, through which membrane different gasses can pass at different rates, said membrane dividing the container into a first region being for holding cargo and a second region defining a gas buffer region, and said membrane being permeable permitting for oxygen and carbon dioxide at different flow rates, wherein the membrane is made from a copolymer of a polyether and a polyamide and has a permeability for carbon dioxide, which is at least eight times higher than the permeability for oxygen, where permeability is measured in accordance with the experimental section in the description, and wherein said at least one inlet and/or outlet is in communication with said buffer region.

**19.** A container according to claim 18 wherein the membrane has a permeability value for $CO_2$ of 50-600 barrer ($1 \cdot 10^{-10}$ $cm^3 \cdot cm/cm^2 \cdot s \cdot cmHg$) and a permeability for carbon dioxide, which is at least eight times higher than the permeability for oxygen, where permeability is measured in accordance with the experimental section in the description.

**Patentansprüche**

**1.** Vorrichtung zur Steuerung der Zusammensetzung von Gasen innerhalb eines versiegelten Containers, welcher Container eine Vielzahl von Wänden beinhaltet, welche Vorrichtung zumindest einen Einlass und/oder Auslass aufweist, wobei die Vorrichtung zumindest einen Sensor, zumindest eine Steuereinheit und zumindest eine gasdurchlässige Membran beinhaltet, durch welche Membran verschiedene Gase bei verschiedenen Raten hindurchtreten können, wobei der Container einen ersten Raum zum Halten der Fracht umfasst, und die Vorrichtung und Membran einen zweiten Gaspufferraum definieren, wobei der zumindest eine Einlass und/oder Auslass mit dem Pufferraum in Verbindung steht, und die Membran durchlässig ist und Sauerstoff und Kohlendioxid bei verschiedenen Strömungsraten zulässt, wobei die Durchlässigkeit gemäß dem experimentellen Abschnitt in der Beschreibung gemessen wird, wobei die Membran eine Schicht umfasst, welche die Selektivität der Membran bestimmt, wobei die Schicht der Membran aus einem Copolymer eines Polyethers und eines Polyamids hergestellt ist.

**2.** Vorrichtung nach Anspruch 1, wobei die Membran eine primäre Schicht, welche die Selektivität der Membran bestimmt, und eine sekundäre Trägerschicht eines mikroporösen Materials mit einer sehr hohen Durchlässigkeit aufweist, die nicht beschränkend für die Durchlässigkeit der entsprechenden Gase ist.

**3.** Vorrichtung nach Anspruch 2, wobei die Membran eine Zwischenlage umfasst, wobei die primäre Schicht an der Zwischenlage befestigt ist, die wiederum an der sekundären Schicht befestigt ist.

**4.** Vorrichtung nach einem der Ansprüche 1-3, wobei die Membran einen Durchlässigkeitswert für $CO_2$ von 50-600

Barrer ($1 \cdot 10^{-10}$ cm$^3 \cdot$cm/cm$^2 \cdot$s$\cdot$cmHg) und eine Durchlässigkeit für Kohlendioxid aufweist, die mindestens 8 Mal höher als die Durchlässigkeit für Sauerstoff ist, wobei die Durchlässigkeit gemäß dem experimentellen Abschnitt in der Beschreibung gemessen wird.

**5.** Vorrichtung nach einem der Ansprüche 1-4, wobei die Membran eine Durchlässigkeit für Kohlendioxid aufweist, die zumindest 9,5 Mal höher als die Durchlässigkeit für Sauerstoff ist, wobei die Durchlässigkeit gemäß dem experimentellen Abschnitt in der Beschreibung gemessen wird.

**6.** Vorrichtung nach Anspruch 5, wobei die Membran eine Durchlässigkeit für Kohlendioxid aufweist, die mindestens 19 Mal höher als die Durchlässigkeit für Sauerstoff ist, wobei die Durchlässigkeit gemäß dem experimentellen Abschnitt in der Beschreibung gemessen wird.

**7.** Vorrichtung nach Anspruch 6, wobei die Membran eine Durchlässigkeit für Kohlendioxid aufweist, die mindestens 30 Mal höher als die Durchlässigkeit für Sauerstoff ist, wobei die Durchlässigkeit gemäß dem experimentellen Abschnitt in der Beschreibung gemessen wird.

**8.** Verfahren zur Steuerung der Zusammensetzung von Gasen innerhalb eines versiegelten Containers, welches Verfahren das Bereitstellen einer Vorrichtung für den Container umfasst, die zumindest einen Einlass und/oder Auslass, zumindest einen Sensor, zumindest eine Steuereinheit und zumindest eine gasdurchlässige Membran beinhaltet, durch welche Membran verschiedene Gase bei verschiedenen Raten hindurchtreten können, welcher Container einen ersten Raum zum Halten der Fracht umfasst, und die Vorrichtung und Membran einen zweiten Pufferraum definieren, wobei der zumindest eine Einlass und/oder Auslass mit dem Pufferraum in Verbindung steht, und die Membran durchlässig ist und Sauerstoff und Kohlendioxid bei verschiedenen Strömungsraten zulässt, wobei die Membran eine Schicht umfasst, welche die Selektivität der Membran bestimmt, wobei die Membran aus einem Copolymer eines Polyethers und eines Polyamids hergestellt ist, welches Verfahren ein kontinuierliches oder intermittierendes Ersetzen eines Teils des oder des gesamten Gases des Pufferraums durch Gas aus der Umgebungsluft umfasst, wobei die Durchlässigkeit gemäß dem experimentellen Abschnitt in der Beschreibung gemessen wird.

**9.** Verfahren nach Anspruch 8, wobei die Membran eine primäre Schicht, welche die Selektivität der Membran bestimmt, und eine sekundäre Trägerschicht eines mikroporösen Materials mit einer sehr hohen Durchlässigkeit aufweist, die nicht beschränkend für die Durchlässigkeit der entsprechenden Gase ist.

**10.** Verfahren nach Anspruch 8 oder 9, wobei die Membran einen Durchlässigkeitswert für CO$_2$ von 50-600 Barrer ($1 \cdot 10^{-10}$ cm$^3 \cdot$cm/cm$^2 \cdot$s$\cdot$cmHg) und eine Durchlässigkeit für Kohlendioxid aufweist, die mindestens 8 Mahl höher als die Durchlässigkeit für Sauerstoff ist, wobei die Durchlässigkeit gemäß dem experimentellen Abschnitt in der Beschreibung gemessen wird.

**11.** Verfahren nach einem der Ansprüche 8-10, wobei die Regelung der Zusammensetzung von Gasen im ersten Raum durch das Mischen des Gases in dem Gaspufferraum und/oder Frachtraum mit Luft aus der Atmosphäre durch das Öffnen eines oder mehrerer Ventile in die umgebende Atmosphäre erfolgt.

**12.** Verfahren nach einem der Ansprüche 8-11, wobei die Regelung der Zusammensetzung von Gasen im ersten Raum durch das Mischen der Gaszusammensetzung im Gaspufferraum und/oder dem Frachtraum mit einem Gas oder einer Mischung von Gasen aus einer eine andere Zusammensetzung von Gasen aufweisenden Quelle erfolgt.

**13.** Verfahren nach einem der Ansprüche 8-12, welches zumindest eines der folgenden Merkmale aufweist

(i) Messen des Kohlendioxidgehalts im Pufferraum und gegebenenfalls Mischen, Verdünnen oder Ersetzen des Gases im Pufferraum und/oder dem Frachtraum durch Luft aus der Außenatmosphäre;
(ii) Messen des Kohlendioxidgehalts im Frachtraum und gegebenenfalls Mischen, Verdünnen oder Ersetzen des Gases im Pufferraum und/oder dem Frachtraum durch Luft aus der Außenatmosphäre;
(iii) Messen des Sauerstoffgehalts im Pufferraum und gegebenenfalls Mischen, Verdünnen oder Ersetzen des Gases im Pufferraum und/oder dem Frachtraum durch Luft aus der Außenatmosphäre;
(iv) Messen des Sauerstoffgehalts im Frachtraum und gegebenenfalls Mischen, Verdünnen oder Ersetzen des Gases im Pufferraum und/oder dem Frachtraum durch Luft aus der Außenatmosphäre.

**14.** Verfahren nach Anspruch 8, wobei das Verfahren das Herstellen eines subatmosphärischen Drucks im Pufferraum umfasst, der Gas vom ersten Raum des Containers durch die Membran absaugt.

**15.** Verfahren nach Anspruch 14, wobei die Membran eine primäre Schicht, welche die Selektivität der Membran bestimmt, und eine sekundäre Trägerschicht eines mikroporösen Materials mit einer sehr hohen Durchlässigkeit aufweist, die nicht beschränkend für die Durchlässigkeit der entsprechenden Gase ist.

**16.** Verfahren nach Anspruch 14 oder 15, wobei die Membran einen Durchlässigkeitswert für $CO_2$ von 50-600 Barrer ($1 \cdot 10^{-10}$ cm³·cm/cm²·s·cmHg) und eine Durchlässigkeit für Kohlendioxid aufweist, die mindestens 8 Mal höher als die Durchlässigkeit für Sauerstoff ist, wobei die Durchlässigkeit gemäß dem experimentellen Abschnitt in der Beschreibung gemessen wird.

**17.** Verfahren nach einem der Ansprüche 14-16, welches zumindest eines der folgenden Merkmale aufweist

(i) Messen des Kohlendioxidgehalts im Pufferraum und gegebenenfalls Absaugen des Gases im Pufferraum und Frachtraum durch die Membran;
(ii) Messen des Kohlendioxidgehalts im Frachtraum und gegebenenfalls Absaugen des Gases im Pufferraum und dem Frachtraum durch die Membran;
(iii) Messen des Sauerstoffgehalts im Pufferraum und gegebenenfalls Absaugen des Gases im Pufferraum und dem Frachtraum durch die Membran;
(iv) Messen des Sauerstoffgehalts im Frachtraum und gegebenenfalls Absaugen des Gases im Pufferraum und dem Frachtraum durch die Membran.

**18.** Versiegelbarer Container mit einer Vielzahl von Wänden und zumindest einem Einlass und/oder Auslass, welcher Container eine Vorrichtung zur Steuerung der Zusammensetzung von Gasen innerhalb des Containers beinhaltet, welche Vorrichtung zumindest einen Sensor, zumindest eine Steuereinheit und zumindest eine gasdurchlässige Membran beinhaltet, die eine primäre Schicht, welche die Selektivität der Membran bestimmt, und eine sekundäre Trägerschicht eines mikroporösen Materials mit einer sehr hohen Durchlässigkeit aufweist, die nicht beschränkend für die Durchlässigkeit der entsprechenden Gase ist, durch welche Membran verschiedene Gase bei verschiedenen Raten hindurchtreten können, welche Membran den Container in einen ersten für das Halten der Fracht vorgesehenen Raum und einen zweiten Raum unterteilt, welcher einen Gaspufferraum definiert, und die Membran durchlässig ist und Sauerstoff und Kohlendioxid bei verschiedenen Strömungsraten zulässt, wobei die Membran aus einem Copolymer eines Polyethers und eines Polyamids hergestellt ist und eine Durchlässigkeit für Kohlendioxid aufweist, die mindestens 8 Mal höher als die Durchlässigkeit für Sauerstoff ist, wobei die Durchlässigkeit gemäß dem experimentellen Abschnitt in der Beschreibung gemessen wird, und wobei der zumindest eine Einlass und Auslass mit dem Pufferraum in Verbindung steht.

**19.** Container nach Anspruch 18, wobei die Membran einen Durchlässigkeitswert für $CO_2$ von 50-600 Barrer ($1 \cdot 10^{-10}$ cm³·cm/cm²·s·cmHg) und eine Durchlässigkeit für Kohlendioxid aufweist, die zumindest 8 Mal höher als die Durchlässigkeit für Sauerstoff ist, wobei die Durchlässigkeit gemäß dem experimentellen Abschnitt in der Beschreibung gemessen wird.

**Revendications**

**1.** Dispositif pour contrôler la composition de gaz dans un récipient scellé, ledit récipient comprenant une pluralité de parois, ledit dispositif ayant au moins une entrée et / ou une sortie, le dispositif comprenant au moins un capteur, au moins un contrôleur et au moins une membrane perméable aux gaz, membrane à travers laquelle des gaz différents peuvent passer à des vitesses différentes, ledit récipient comprenant une première région pour retenir la cargaison et le dispositif et la membrane définissant une deuxième région tampon de gaz, ladite au moins une entrée et / ou sortie étant en communication avec ladite région tampon et ladite membrane étant perméable permettant l'oxygène et le dioxyde de carbone à différents débits, la perméabilité étant mesurée en fonction de la section d'expérience dans la description, ladite membrane comprenant une couche déterminant la sélectivité de la membrane, ladite couche de la membrane étant faite d'un copolymère d'un polyéther et d'un polyamide.

**2.** Dispositif selon la revendication 1, dans lequel la membrane comprend une couche primaire déterminant la sélectivité de la membrane et une couche de support secondaire d'un matériau microporeux avec une perméabilité très élevée, n'étant pas limitée pour la perméabilité des gaz pertinents.

**3.** Dispositif selon la revendication 2, dans lequel la membrane comprend une couche intermédiaire, la couche primaire étant attachée à la couche intermédiaire qui, à son tour, est attachée à la couche secondaire.

**4.** Dispositif selon l'une quelconque des revendications 1 à 3, dans lequel la membrane présente une valeur de perméabilité pour le $CO_2$ de 50-600 bars ($1 \cdot 10^{-10}$ cm$^3$•cm/cm$^2$•s•cmHg) et une perméabilité au dioxyde de carbone, qui est au moins huit fois supérieure à la perméabilité à l'oxygène, la perméabilité étant mesurée en fonction de la section d'expérience dans la description.

**5.** Dispositif selon l'une quelconque des revendications 1 à 4, dans lequel la membrane présente une perméabilité pour le dioxyde de carbone qui est au moins 9,5 fois supérieure à la perméabilité à l'oxygène, la perméabilité étant mesurée en fonction de la section d'expérience dans la description.

**6.** Dispositif selon la revendication 5, dans lequel la membrane présente une perméabilité pour le dioxyde de carbone qui est au moins 19 fois supérieure à la perméabilité à l'oxygène, la perméabilité étant mesurée en fonction de la section d'expérience dans la description.

**7.** Dispositif selon la revendication 6, dans lequel la membrane présente une perméabilité pour le dioxyde de carbone qui est au moins 30 fois supérieure à la perméabilité à l'oxygène, la perméabilité étant mesurée en fonction de la section d'expérience dans la description.

**8.** Procédé pour contrôler la composition de gaz dans un récipient scellé, ledit procédé comprenant la fourniture au récipient d'un dispositif comprenant au moins une entrée et / ou une sortie, au moins un capteur, au moins un contrôleur et au moins une membrane perméable aux gaz, membrane à travers laquelle des gaz différents peuvent passer à des vitesses différentes, ledit récipient comprenant une première région pour retenir la cargaison, et le dispositif et la membrane définissant une deuxième région tampon, ladite au moins une entrée et / ou sortie étant en communication avec ladite région tampon et ladite membrane étant perméable permettant l'oxygène et le dioxyde de carbone à différents débits, ladite membrane comprenant une couche déterminant la sélectivité de la membrane, ladite membrane étant faite d'un copolymère d'un polyéther et d'un polyamide, ledit procédé comprenant un remplacement continu ou intermittent d'une partie ou de la totalité du gaz entier de la région tampon avec le gaz de l'air ambiant, la perméabilité étant mesurée en fonction de la section d'expérience dans la description.

**9.** Procédé selon la revendication 8, dans lequel la membrane comprend une couche primaire déterminant la sélectivité de la membrane et une couche de support secondaire d'un matériau microporeux avec une perméabilité très élevée, n'étant pas limitée pour la perméabilité des gaz pertinents.

**10.** Procédé selon la revendication 8 ou 9, dans lequel la membrane présente une valeur de perméabilité pour le $CO_2$ de 50-600 bars ($1 \cdot 10^{-10}$ cm$^3$•cm/cm$^2$•s•cmHg) et une perméabilité au dioxyde de carbone, qui est au moins huit fois supérieure à la perméabilité à l'oxygène, la perméabilité étant mesurée en fonction de la section d'expérience dans la description.

**11.** Procédé selon l'une quelconque des revendications 8 à 10, dans lequel la régulation de la composition des gaz dans la première région est effectuée en mélangeant le gaz dans la région tampon de gaz et / ou la région de cargaison avec l'air de l'atmosphère en ouvrant une ou plusieurs vannes à l'atmosphère ambiante.

**12.** Procédé selon l'une quelconque des revendications 8 à 11, dans lequel la régulation de la composition des gaz dans la première région est effectuée en mélangeant la composition de gaz dans la région tampon de gaz et / ou la région de cargaison avec un gaz ou un mélange de gaz d'une source ayant une composition différente de gaz.

**13.** Procédé selon l'une quelconque des revendications 8 à 12, qui présente au moins l'une des caractéristiques suivantes

(i) le fait de mesurer la teneur en dioxyde de carbone dans la région tampon et, si nécessaire, mélanger, diluer ou remplacer le gaz dans la région tampon et / ou la région de la cargaison avec de l'air provenant de l'atmosphère extérieure ;
(ii) le fait de mesurer la teneur en dioxyde de carbone dans la région de cargaison et, si nécessaire, mélanger, diluer ou remplacer le gaz dans la région tampon et / ou la région de cargaison avec de l'air provenant de l'atmosphère extérieure ;
(iii) le fait de mesurer la teneur en oxygène dans la région tampon et, si nécessaire, mélanger, diluer ou remplacer le gaz dans la région tampon et / ou la région de cargaison avec de l'air provenant de l'atmosphère extérieure ;
(iv) le fait de mesurer la teneur en oxygène dans la région de cargaison et, si nécessaire, mélanger, diluer ou remplacer le gaz dans la région tampon et / ou la région de cargaison avec de l'air provenant de l'atmosphère extérieure.

**14.** Procédé selon la revendication 8, dans lequel ledit procédé comprenant l'établissement d'une pression sous-atmosphérique dans la région tampon aspirant le gaz de la première région du récipient à travers la membrane.

**15.** Procédé selon la revendication 14, dans lequel la membrane comprend une couche primaire déterminant la sélectivité de la membrane et une couche de support secondaire d'un matériau microporeux avec une perméabilité très élevée, n'étant pas limitée pour la perméabilité des gaz pertinents.

**16.** Procédé selon la revendication 14 ou 15, dans lequel la membrane présente une valeur de perméabilité pour le $CO_2$ de 50-600 bars ($1 \cdot 10^{-10}$ $cm^3 \cdot cm/cm^2 \cdot s \cdot cmHg$) et une perméabilité au dioxyde de carbone, qui est au moins huit fois supérieure à la perméabilité à l'oxygène, la perméabilité étant mesurée en fonction de la section d'expérience dans la description.

**17.** Procédé selon l'une quelconque des revendications 14 à 16, qui présente au moins l'une des caractéristiques suivantes

(i) le fait de mesurer la teneur en dioxyde de carbone dans la région tampon et, si nécessaire, aspirer le gaz dans la région tampon et la région de cargaison à travers la membrane ;
(ii) le fait de mesurer la teneur en dioxyde de carbone dans la région de cargaison et, si nécessaire, aspirer le gaz dans la région tampon et la région de cargaison à travers la membrane ;
(iii) le fait de mesurer la teneur en oxygène dans la région tampon et, si nécessaire, aspirer le gaz dans la région tampon et la région de cargaison à travers la membrane ;
(iv) le fait de mesurer la teneur en oxygène dans la région de cargaison et, si nécessaire, aspirer le gaz dans la région tampon et la région à travers la membrane.

**18.** Récipient scellable ayant une pluralité de parois, et au moins une entrée et / ou une sortie, ledit récipient comprenant un dispositif pour contrôler la composition de gaz dans le récipient, ledit dispositif comprenant au moins un capteur, au moins un contrôleur et au moins une membrane perméable aux gaz comprenant une couche primaire déterminant la sélectivité de la membrane et une couche de support secondaire d'un matériau microporeux avec une perméabilité très élevée, n'étant pas limitée pour la perméabilité des gaz pertinents, membrane à travers laquelle des gaz différents peuvent passer à des vitesses différentes, ladite membrane divisant le récipient en une première région étant destinée à retenir la cargaison et une deuxième région définissant une région tampon de gaz, et ladite membrane étant perméable permettant l'oxygène et le dioxyde de carbone à différents débits, la membrane étant faite d'un copolymère d'un polyéther et d'un polyamide et présentant une perméabilité au dioxyde de carbone, qui est au moins huit fois supérieure à la perméabilité à l'oxygène, la perméabilité étant mesurée en fonction de la section d'expérience dans la description, et ladite au moins une entrée et / ou une sortie étant en communication avec ladite région tampon.

**19.** Récipient selon la revendication 18, dans lequel la membrane présente une valeur de perméabilité pour le $CO_2$ de 50-600 bars ($1 \cdot 10^{-10}$ $cm^3 \cdot cm/cm^2 \cdot s \cdot cmHg$) et une perméabilité au dioxyde de carbone, qui est au moins huit fois supérieure à la perméabilité à l'oxygène, la perméabilité étant mesurée en fonction de la section d'expérience dans la description.

Fig. 1

Fig. 2

Fig. 3

EP 2 051 853 B1

Fig. 4

Fig. 5

Fig. 6

Figure 7

Figure 8

EP 2 051 853 B1

Figure 9

EP 2 051 853 B1

Figure 10

EP 2 051 853 B1

Figure 11

EP 2 051 853 B1

**EP 2 051 853 B1**

**Patent documents cited in the description**

- WO 2004107868 A
- US 6376032 B

- WO 2004107868 A1
- US 6376032 B1, CLARKE

**Non-patent literature cited in the description**

- Selvorganiserende polymerer - skabeloner til nano-porøse materialer. *Dansk Kemi,* 2004, vol. 85 (11), 32-34

- **VIGILD et al.** Selvorganiserende polymerer - skabeloner til nanoporøse materialer. *Dansk Kemi,* 2004, vol. 85 (11), ISSN 0011-6335, 32-34